(19) **Europäisches Patentamt / European Patent Office / Office européen des brevets**

(11) **EP 2 726 285 B1**

(12) **EUROPEAN PATENT SPECIFICATION**

(45) Date of publication and mention of the grant of the patent:
**22.07.2015 Bulletin 2015/30**

(21) Application number: **12732847.4**

(22) Date of filing: **29.06.2012**

(51) Int Cl.:
**B32B 27/36** (2006.01)

(86) International application number:
**PCT/GB2012/000560**

(87) International publication number:
**WO 2013/001269 (03.01.2013 Gazette 2013/01)**

(54) **DIMENSIONALLY STABLE MULTI-LAYER POLYESTER FILMS**

FORMSTABILE MEHRSCHICHTIGE POLYESTERFOLIEN

FILMS POLYESTER MULTICOUCHES À STABILITÉ DIMENSIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2011 GB 201111245**
**19.07.2011 GB 201112454**

(43) Date of publication of application:
**07.05.2014 Bulletin 2014/19**

(73) Proprietor: **DuPont Teijin Films U.S. Limited Partnership**
**Chester, VA 23836 (US)**

(72) Inventors:
• **MacKERRON, Duncan Henry**
**Cleveland**
**Guisborough TS14 8JX (GB)**
• **ISHIDA, Takeshi**
**Gifu 503-0856 (JP)**
• **FRANCIS, John**
**Yarm TS15 9RJ (GB)**
• **LOONEY, Maurice Kieran**
**Darlington DL2 2JJ (GB)**

(74) Representative: **Cockerton, Bruce Roger**
**Carpmaels & Ransford LLP**
**One Southampton Row**
**London WC1B 5HA (GB)**

(56) References cited:
**EP-A1- 1 712 592      US-A1- 2009 280 341**

• **DATABASE WPI Week 200132 Thomson Scientific, London, GB; AN 2001-303057 XP002681467, -& JP 2000 326467 A (TEIJIN LTD) 28 November 2000 (2000-11-28) cited in the application**

**Description**

The present invention concerns a biaxially oriented multi-layer film which exhibits excellent dimensional stability under changing conditions of humidity and temperature and high mechanical integrity.

Areas of application where these properties are important include flexible electronics, flexible displays and magnetic recording. In each case, a substrate or base on which either micro-circuitry is built or a magnetic recording layer is supported, must have excellent dimensional stability in order, respectively, to offer reliable registry of micro-electronic features when applied in successive stages during fabrication, or to permit narrow but stable track pitch required for higher capacity in data storage.

It has been reported that for biaxial polymeric film, an improvement in dimensional stability to change in temperature (for example the linear coefficient of thermal expansion, CTE) and to change in ambient humidity (for example the coefficient expansion of humidity, CHE) can be achieved via an increase in the modulus, measured in the plane of the film. The increase is provided by the choice of processing conditions, in particular by an increase in the stretching ratio during manufacture of the biaxial film. Stretching of a polymeric film is common practice and is usually performed in two directions, namely the forward, process or machine direction (MD) and in the sideways, in-plane or transverse direction (TD). However, a practical limit to the stretching ratios is recognised to avoid splitting or disruption during manufacture and, moreover, high stretch ratios could compromise the balance of properties in the MD and TD.

Other routes to improvement in dimensional stability have looked at combinations of polymeric materials, as blends or as discrete, separate layers comprising the basic film. In practice, film which is designed to meet several demanding specifications is often obtained only through use of a combination of polymeric materials and in the form of a multi-layer structure, as taught in EP-0592284-A, US-5759467, US-2005/0058825-A1. For example, EP-1712592-A reports polyolefinic materials combined with polyesters to yield improvements in dimensional stability with respect to humidity.

There is, however, a complication to the multi-layer strategy. The majority of polymers are known to be mutually incompatible, and will spontaneously phase separate under conditions of sufficient molecular mobility (for example at temperatures above their melting temperature). As a result, multi-layer film structures which comprise layers from different polymeric materials often show poor interlayer adhesion and are likely to delaminate under minimal stress. There are at least two strategies to overcome poor interlayer adhesion between dissimilar polymeric materials.

The first strategy is the addition of a compatibiliser directly to one or both of the materials in question. The benefit of this is that it allows the simplest process technology to be retained; the discrete polymer materials are modified by blending with the compatibiliser and the same extrusion and film-forming process is suitable. However, the act of blending will often diminish the key properties of the polymer and quite large quantities of the additive may be required to achieve sufficient compatibilisation with the second polymeric material.

The second strategy is the inclusion of "tie-layers" in the multi-layer structure. The materials of the tie-layer are designed to promote adhesion specifically at the interface between layers of the laminate or multi-layer structure. Various tie-layer materials are available commercially but there are limits to their effectiveness, for reasons similar to those mentioned above. No product exists which is capable of adhering to all polymers under relevant film processing conditions, and in practice each tie-layer material will provide a bond between only a few specific types of polymers. Despite the previous use of tie-layer materials in multi-layer films or laminates, the science and understanding of these materials and their selection is far from complete. Thus, some investigations have revealed the fundamental mechanism of failure of multi-layer film structures which contain tie-layers (Dias et al., Polymer 49, 2937 (2008); & Kamdar et al., Polymer 50, 3319 (2009)). However, the mechanisms are typically unique to each system and it is not possible to transfer any general understanding to predict the effectiveness of tie-layer materials. Attempts have been made to apply knowledge derived from polymeric compatibilisers, which perform the related function in polymer blends by modifying the mutual incompatibility of dissimilar polymer systems in a mixing environment, but the literature presents contradictory evidence in this regard.

It is an object of this invention to provide new polymeric films with an improved combination of properties for applications in magnetic recording media, flexible electronics, flexible displays and the like. It is a further object of this invention to provide new polymeric films which exhibit improvements in one or more properties selected from creep, tensile strength and modulus, coefficient of thermal expansion and coefficient of humidity expansion. It is a further object of this invention to provide new multi-layer polymeric films which exhibit excellent dimensional stability in combination with delamination resistance and good film-forming capability, for instance exhibiting layer integrity and excellent flatness and layer profile.

The present invention meets the objective by the provision of a multi-layer structure comprising dissimilar polymeric materials and a tie-layer in order to retain high internal robustness and resistance to delamination.

Thus, according to the present invention there is provided a multi-layer biaxially oriented film comprising a first layer (A) comprising an aromatic polyester (a) and a second layer (B) comprising a polyolefin (b) having a melting point of from 230 to 290°C wherein said polyolefin is a styrene polymer, and an adhesive interlayer (C) between a layer (A) and a layer (B), wherein said adhesive interlayer (C) comprises a tie-layer material (c) selected from anhydride-modified ethylene copolymers in which the proportion of anhydride present in the copolymer is no more than 3.0 % by weight of the polymer, and in which the ethylene copolymer comprises one or more additional comonomers other than styrene.

The multi-layer film of the present invention unexpectedly exhibits the combination of high resistance to delamination and excellent film quality.

In the film of the present invention, dimensional changes arising from changes of humidity and/or temperature are controlled to remain within a predetermined range through design of chemical and physical structure. Accordingly, the film of the invention is suitable as a base film for magnetic recording media, particularly magnetic recording media required to exhibit reduced track deviation in order to permit narrow but stable track pitch and allow recording of higher density or capacity of information, for instance magnetic recording media suitable as server back-up/data storage, such as the LTO (Linear Tape Open) format.

Additional areas of application which benefit from both the thermal and humidity dependent dimensional stability of the film of this invention are in electronic and display devices (particularly wherein the film is required to be flexible in such electronic and display devices) where dimensionally stable backplanes are critical during fabrication of the finished product. Thus, the film of the present invention may be advantageously used in the manufacture of electronic or opto-electronic devices, such as electroluminescent (EL) display devices (particularly organic light emitting display (OLED) devices), electrophoretic displays (e-paper), photovoltaic (PV) cells and semiconductor devices (such as organic field effect transistors, thin film transistors and integrated circuits generally), particularly flexible such devices.

As used herein, the term "laminate film" is intended to be synonymous with the term "multi-layer film", and is not intended to imply any particular method of manufacture.

The biaxially oriented film of the invention comprises one or more discrete layers (A) comprising aromatic polyester (a), one or more discrete layers (B) comprising polyolefin (b), and one or more discrete adhesive interlayers (C) comprising tie-layer material (c). An adhesive interlayer is located between a polyester layer (A) and a polyolefin layer (B) in the structure. Preferably, each of the layers (A) comprises the same aromatic polyester (a). Preferably, each of the layers (B) comprises the same polyolefin (b). Preferably, each of the adhesive interlayers (C) comprises the same tie-layer material (c).

The proportion of the polyolefin (b) present in the biaxially oriented film is preferably within a range of from about 2 to about 70% by weight based on the entire weight of the film, preferably from about 2 to about 60% by weight, more preferably from about 3 to about 55% by weight, more preferably from about 3 to about 50% by weight, more preferably from about 5 to about 50% by weight and more preferably from about 5 to about 30% by weight. In one embodiment, the proportion of the polyolefin (b) present in the biaxially oriented film is from about 30 to about 60% by weight. If the content of the polyolefin (b) is too low, the dimensional stability with respect to humidity becomes poor. Where the content of the polyolefin (b) is too high, the mechanical properties of the film become poor, and formation of the film by stretching becomes difficult.

The proportion of tie-layer material (c) is suitably described in terms of the thickness of each individual layer of the tie-layer material in the biaxially oriented film. Particularly for use in magnetic media, the thickness of each individual layer of the tie-layer material is preferably at least about 0.05$\mu$m and preferably no more than about 2.5$\mu$m, and is preferably in the range from about 0.1$\mu$m to about 1.5$\mu$m, more preferably from about 0.2$\mu$m to about 1.0$\mu$m, more preferably from about 0.3$\mu$m to about 0.5$\mu$m, and in one embodiment from about 0.4$\mu$m to about 0.5$\mu$m. If the layer thickness is too low, the interlayer adhesion between a layer (A) and a layer (B) may become inadequate for an acceptable physical integrity of the multi-layer film. If the proportion of (c) is too high such that its layer thickness is greater than the preferred upper limit, the mechanical strength and dimensional stability to change in temperature and humidity of the multi-layer film may become poor.

Particularly where the film of the present invention is for use in magnetic recording media, the thickness of the multilayer film is preferably in the range of from about 1 to about 10 $\mu$m, more preferably from about 2 to about 10 $\mu$m, more preferably from about 2 to about 7 $\mu$m, more preferably from about 3 to about 7 $\mu$m, and in one embodiment from about 4 to about 6 $\mu$m. If the thickness exceeds about 10 $\mu$m, the length of magnetic tape length is undesirably decreased (since the tape must be contained within a cassette of a certain size) and magnetic recording capacity is undesirably decreased. If the film thickness is too low, film breakage occurs more frequently during manufacture, or the winding property of the film becomes sometimes poor.

Where the film is to be used as a layer in electronic and display devices as described herein, the thickness of the multilayer film is typically within the range of from about 5 to about 350 $\mu$m, preferably no more than about 250 $\mu$m, and in one embodiment no more than about 100 $\mu$m, and in a further embodiment no more than about 50 $\mu$m, and typically at least 12$\mu$m, more typically at least about 20 $\mu$m. In this embodiment, the thickness of the adhesive interlayer(s) (C) will be correspondingly greater than those described hereinabove.

The aromatic polyester (a) is obtained by polycondensation of a diol and an aromatic dicarboxylic acid. The aromatic dicarboxylic acid includes, for example, terephthalic acid, isophthalic acid, 1,4-, 2,5-, 2,6- or 2,7-naphthalenedicarboxylic acid (and of these 2,6-naphthalene dicarboxylic acid is preferred), and 4,4'-diphenyldicarboxylic acid, and the diol includes, for example, ethylene glycol, 1,4-butanediol, 1,4-cyclohexane dimethanol, and 1,6-hexanediol. Preferred polyesters are polyethylene terephthalate (PET) and polyethylene-2,6-naphthalene dicarboxylate (also referred to herein as polyethylene-2,6-naphthalate) particularly for their mechanical properties and heat resistance. As used herein, the term "PEN" refers to polyethylene naphthalate, preferably polyethylene-2,6-naphthalate. PEN is of particular utility in the present invention.

The polyester may be used alone, as a copolymer with another polyester, or a mixture of two or more kinds of polyesters, and it is used preferably alone, from the view point of mechanical properties and heat-resistance. The other ingredient(s) in a copolymer or a mixture is preferably no more than 10 mol% and, more preferably no more than 5 mol% based on the number of moles for the repetitive structural units. The copolymerization ingredient may include a diol ingredient such as diethylene glycol, neopentyl glycol, and polyalkylene glycol, and/or a dicarboxylic acid ingredient such as adipic acid, sebacic acid, phthalic acid, isophthalic acid, terephthalic acid, and 5-sodium sulfoisophthalic acid.

The intrinsic viscosity (IV) of the polyester (a) from which the substrate is manufactured is 0.40 or more, typically at least about 0.58, more typically at least about 0.60, and typically no more than about 0.80, more typically no more than about 0.70. In a preferred embodiment, a PET polyester has an IV in the range of from about 0.6 to about 0.65, and a PEN polyester has an IV in the range of from about 0.58 to about 0.68. In an alternative embodiment, the substrate can be manufactured from a polyester with a higher intrinsic viscosity, for instance, having an IV of at least about 0.70, and in a further embodiment at least about 0.80, and typically no more than 0.90. Solid state polymerisation may be used to increase the intrinsic viscosity to the desired value, using conventional techniques well-known in the art, for instance using a fluidised bed such as a nitrogen fluidised bed or a vacuum fluidised bed using a rotary vacuum drier. If the intrinsic viscosity is less than 0.4, splitting may occur during film formation, or the film strength after fabrication may become inadequate. If the intrinsic viscosity exceeds 0.8, the productivity of the polymerization stage is lowered.

The melting point of the polyester resin in the invention is preferably from 200 to 300°C, more preferably from 240 to 300°C and particular preferably from 260 to 290°C. If the melting point falls below the lower limit, the heat resistance of the polyester film may become inadequate.

The polyolefin (b) preferably has a melting point from about 230 to about 280°C, preferably from about 240 to about 275°C. At lower melting points, the heat resistance of the resultant biaxially oriented film may be impaired.

The polyolefin includes, for example, polystyrene, polymethylstyrene, polydimethylstyrene, and polybutylstyrene. Among them, from a view point of heat-resistance and mechanical properties, a styrene polymer having a syndiotactic structure is preferred.

The preferred syndiotactic styrene polymer is a polystyrene having a syndiotactic structure in view of a stereochemical structure and the tacticity measured by nuclear magnetic resonance method (13C-NMR method) is 75% or more and, preferably, 85% or more for a diad (constituent unit: 2) and 30% or more and, preferably, 50% or more for a pentad (constituent unit: 5).

The syndiotactic styrene polymer includes polystyrene, poly(alkylstyrene)s (such as poly(methyl)styrene, poly(ethylstyrene), poly(propylstyrene) and poly(butylstyrene)), and poly(arylstyrene)s (preferably poly(phenylstyrene)). Among them, polystyrene, poly(p-methylstyrene), poly(m-methylstyrene), and poly(p-tertiary butylstyrene) can be preferably mentioned as examples.

The syndiotactic styrene polymer in the invention may be used alone or two or more of them may be used in combination. The polymerization average molecular weight of the syndiotactic styrene polymer in the invention is preferably about 10,000 or more, and more preferably about 50,000 or more. If the polymerization average molecular weight is less than this lower limit, heat resistance and mechanical properties may become inadequate. The polymerization average molecular weight is preferably no more than about 500,000 since the film forming property may be impaired.

The thermoplastic polymer employed as the tie-layer material (c) is an anhydride-modified ethylene copolymer, i.e. a copolymer based on polyethylene which is modified by an anhydride and which further comprises one or more additional comonomers. The one or more additional comonomers are selected from comonomers other than styrene (vinyl benzene), and in one embodiment are selected from comonomers other than vinyl aromatic compounds ($CH_2$=CH-Ar, where Ar is an aromatic group). Thus, the polymer consists of ethylene repeating units, anhydride repeating units, and repeating units of said one or more additional comonomers. The anhydride repeating units are either copolymerised into or, preferably, grafted onto the polymer backbone chain. The anhydride is preferably maleic anhydride. The polymer is further improved for adhesion performance by the incorporation of moieties of maleic anhydride, either copolymerised into or preferably grafted onto the polymer backbone chain comprising the ethylene repeating units and the repeating units of said one or more additional comonomers. The copolymer preferably comprises the monomeric ethylene units present at a weight percent level of from about 40% to about 95%, more preferably from about 60% to about 95%, and in one embodiment from about 90% to about 95%, and in a first alternative embodiment from about 70% to about 80%, and in a second alternative embodiment from about 60% to about 80%, preferably from about 65 to about 75%. The copolymer preferably further comprises one or more comonomer(s) selected from:

(i) propylene, preferably at a weight percent level of from 0 to about 40%, and in a preferred embodiment from about 30% to about 40%;

(ii) butene, preferably at a weight percent level of from 0 to about 5%, and in a preferred embodiment from about 0.5% to about 2.5%;

(iii) acrylate ester as the methyl, ethyl, propyl or butyl ester, preferably at the weight percent level of from 0 to about 15%, and in a preferred embodiment from about 5% to about 10%;

(iv) vinyl acetate at a weight percent level of from 0 to 30%, and in a preferred embodiment from about 20% to about 30%; and

(v) maleic anhydride, preferably at a weight percent level of up to about 3.0%, preferably from about 0.1 to 3.0%, more preferably no more than about 2.5%, and typically no more than about 2.0%.

In a first preferred embodiment, the copolymer is an anhydride-modified ethylene vinyl acetate copolymer, i.e. comprises (and preferably consists of) ethylene, vinyl acetate and anhydride monomeric units, preferably wherein the anhydride units are grafted onto a polymer backbone comprising (and preferably consisting of) ethylene and vinyl acetate monomeric units, and preferably wherein the anhydride is maleic anhydride. In this embodiment, the ethylene units are preferably present in amounts of from about 70% to about 80%, by weight; the vinyl acetate units are preferably present in amounts of from about 20% to about 30% by weight; and the anhydride units are preferably present in amounts of from about 0.1% to about 2.5% by weight, preferably from about 0.1 to about 2% by weight.

In a second particularly preferred embodiment, the copolymer is an anhydride-modified ethylene acrylate copolymer, i.e. comprises (and preferably consists of) ethylene, acrylate and anhydride monomeric units, preferably wherein the anhydride units are grafted onto a polymer backbone comprising (and preferably consisting of) ethylene and acrylate monomeric units, and preferably wherein the anhydride is maleic anhydride. In this embodiment, the ethylene units are preferably present in amounts of from about 90% to about 95%, by weight; the acrylate units are preferably present in amounts of from about 5% to about 10% by weight; and the anhydride units are preferably present in amounts of from about 0.1% to about 2.5% by weight, preferably from about 0.1 to about 2% by weight.

In a third particularly preferred embodiment, the copolymer is an anhydride-modified ethylene copolymer comprising one or more additional alkene monomeric repeating units, i.e. comprises (and preferably consists of) ethylene and one or more additional alkene monomeric repeating units, and anhydride monomeric units, preferably wherein the anhydride units are grafted onto a polymer backbone comprising (and preferably consisting of) ethylene and one or more additional alkene momomeric units, and preferably wherein the anhydride is maleic anhydride. In this embodiment, the additional alkene monomeric units are preferably selected from propylene and butene, and preferably both are present in the copolymer. In this embodiment, the ethylene units are preferably present in amounts of from about 60% to about 80%, preferably from about 65% to about 75%, by weight; the one or more additional alkene monomeric repeating units are preferably present in an amount of from about 20% to about 40% by weight, preferably wherein propylene units are present in an amount from about 30% to about 40%, and butene units are present in an amount from about 0.5% to about 2.5%; and the anhydride units are preferably present in amounts of from about 0.1% to about 2.5% by weight, preferably from about 0.1 to about 2% by weight.

Preferably, the anhydride-modified ethylene copolymer is selected from the second and third particularly preferred embodiments described immediately hereinabove.

As well as imparting the appropriate degree of adhesion between adjacent layers of the multi-layer film, the tie-layer must also show compatibility with the process conditions employed in the manufacture of polyester and/or polyolefin multi-layer films, and thus possess the appropriate thermal stability and rheology at the appropriate extrusion and process temperatures. For example, the tie-layer thermoplastic material preferably:

(i) exhibits a Vicat softening temperature in the range from about 30°C to about 100°C (preferably 30°C to 70°C), and/or

(ii) exhibits a melt flow index (MFI) of from about 4 to about 10 g/10 minutes; and/or

(iii) be sufficiently thermally stable at the appropriate extrusion and process temperatures, which are typically at least about 260°C, and typically in the range of from about 260°C to about 310°C,

and preferably exhibits at least the Vicat and MFI characteristics, and more preferably exhibits all three of these characteristics.

In the present invention, thermal stability is assessed using thermogravimetric analysis (TGA), which measures the change in mass (or more usually weight loss) as a result of heating a polymer sample under nitrogen at elevated temperature. In a preferred embodiment, the term "sufficiently thermally stable" means that the material must exhibit a weight loss of no more than 5%, preferably no more than 4%, preferably no more than 3% and most preferably a weight loss of essentially zero, when heated isothermally at 310°C, under an atmosphere of nitrogen, for a period of 10 minutes according to the test described hereinbelow.

The tie-layer material (c) may exhibit a substantially lower melting point than the polyester and polyolefin, yet be able to remain thermally stable over the timescale of processing and manufacture.

In the biaxially oriented film, the film layer (A) comprises the aromatic polyester (a), and may be mixed or copolymerized with another resin in such a range so as not to deteriorate the purpose of the invention. The content of the aromatic polyester (a) in a film layer (A) is preferably 90% by weight or more, and more preferably 95% by weight or more, based on the weight of the film layer (A).

In the biaxially oriented film, the film layer (B) comprises the polyolefin (b), and may be mixed or copolymerized with another resin within such a range so as not to deteriorate the purpose of the invention. The content of the polyolefin (b) in a film layer (B) is preferably 90% by weight or more, and more preferably 95% by weight or more, based on the weight of the film layer (B).

Preferred layer structures of the biaxially oriented film which exhibit excellent delamination resistance include:

(i) a 3-layered constitution in which a film layer (A) is laminated to one surface of the film layer (B) by the presence of the intermediate film layer (C);
(ii) a 5-layered constitution in which the film layer (A) is laminated to both surfaces of a film layer (B) by a total of two intermediate layers of film (C), and
(iii) a multi-layered structure in which a film layer (A) and a film layer (B) are laminated using intermediate film layers (C) to produce a stack of 7 or 9 or more layers in total, and in one embodiment 9 or 13 or more layers, and in one embodiment 13 or more layers. While the upper limit is not particularly restricted, it is preferably no more than 51 layers, more preferably no more than 25 layers, in order to reduce the complexity of the manufacturing process. The film layer (A) and the film layer (B) are preferably arranged alternately, with an intermediate layer of film layer C therebetween, i.e. such that the layer sequence is [...ACBCACBCA...].

Multi-layer films having at least 5 layers, for instance the 5-layered stack (ii) and multi-layered stack (iii), are preferred from the point of view of curling resistance.

In the case of multi-layer films having at least 5 layers, for instance the 5-layered stack (ii) and multi-layered stack (iii), it is preferred that the outer layer of the film laminate is a film layer (A), which provides further improvements to the curling resistance.

In the case of the multi-layered stack (iii), the lower limit of thickness for the or each adhesive interlayer (C) may imply an upper limit to the number of layers present, particularly where the film of the present invention is for use in magnetic recording media, which may necessarily impose an upper limit of practical thickness on the biaxial film. For example, a multi-layer stack of 51 layers comprising an individual film layer (C) thickness of 0.1 $\mu$m and in which the tie-layer polymer (c) accounts for 5% of the total structure would imply an overall thickness of a multi-layer film of around 34$\mu$m. This example illustrates that while there are essentially no technical limits to the number of layers from which the multi-layer stack may be fabricated, there may be a practical limit imposed by the final overall thickness of the product depending on the end-use of the film, for instance as a substrate for magnetic recording media.

In one embodiment, the biaxially oriented multi-layer film of the present invention comprises 5 layers in its structure in which the polyester layer (A) is laminated to both surfaces of the polyolefin layer (B) by virtue of a total of two adhesive interlayers (C), wherein the total thickness of the biaxially oriented laminate film is from about 4 to about 6 $\mu$m in which the thickness of each layer (C) is from about 0.4 to about 0.5 $\mu$m, particularly wherein the thickness of each polyester layer (A) is about twice the thickness of the polyolefin layer (B).

The biaxially oriented film in the invention includes, as a specific example, the multi-layer film described above, comprising 5 layers in its structure in which the polyester layer (A) is laminated to both surfaces of the polyolefin layer (B) by virtue of a total of two adhesive interlayers (C). The total thickness of the biaxially oriented laminate film is about 6 $\mu$m of which layer (C) accounts for a total of 0.8 $\mu$m (two layers each 0.4 $\mu$m), polyester layers (A) account for 4.2 $\mu$m (two layers each of 2.1 $\mu$m) and polyolefin layer (B) accounts for 1.0 $\mu$m.

The biaxially oriented film of the invention can contain inert particles in the film, for example, inorganic particles containing elements of group IIA, IIB, IVA, and IVB of the periodical table (for example, kaolinite, alumina, titanium oxide, calcium carbonate, and silicon dioxide), and fine particles comprising highly heat resistant polymers such as particles of crosslinked silicone resin, crosslinked polystyrene, crosslinked acrylic particles. The presence of such inert or inorganic particles can provide, for example, benefits in film handling, winding and slitting during manufacture and conversion to the final product.

In the case of film used as magnetic recording media, the incorporation of particles can be of advantage in facilitating winding and running of the slit tape through a cassette housing and over a media recording and writing head. In the latter case, however, optimum performance may be achieved by a degree of flatness of the surface of the film in contact with the recording head which is different to the degree of flatness on the reverse surface which can be engineered for fast running and winding. Often a smooth or planar surface is optimum for the surface in contact with a magnetic recording head in order to provide the best electromagnetic conversion characteristic, while a rough profile is more suitable for the reverse face to encourage good winding performance. A multi-layer film which presents a different degree of roughness on each surface can be obtained by incorporating different particle ingredients in each layer. Moreover during manufacture, processing and end-use, there will be more than one optimum value of surface roughness and consequently the desired compromise will be achieved by judicious selection of filler size, size range and size distribution, loading by weight based on the entire weight of the film, and even a combination of two or more different filler ingredients.

The average particle diameter of the inert particles is preferably within a range from about 0.001 to about 5 $\mu$m, preferably from about 0.01 to about 0.8 $\mu$m, more preferably from about 0.02 to about 0.6 $\mu$m, and particularly preferably from about 0.03 to about 0.4 $\mu$m.

The inert particles are preferably contained within a range from about 0.01 to about 10% by weight based on the entire weight of the film. Particularly where the biaxially oriented film is used in magnetic recording media, the inert particles are not present in the surface layer on the side of the smooth or planar surface or, if present, it is at most 0.5% by weight, preferably at most 0.4% by weight, and more preferably at most 0.3% by weight based on the weight of the film layer forming the surface on the side of the smooth or planar surface. On the other hand, for the surface layer on the side of the rough surface, it is preferred that the inert particles are preferably present in an amount of from about 0.01 to about 1.0% by weight, preferably from about 0.03 to about 0.8% by weight and, particularly preferably, from about 0.05 to about 0.6% by weight based on the weight of the film layer forming the rough surface.

The inert particles contained in the film may be either of a single ingredient system or multi-ingredient system. However, the film preferably comprises inert particles in a dual-ingredient system or higher multi-ingredient system for the purpose of compatibilizing the electromagnetic conversion characteristics of the tape and the winding property of the film. The surface roughness of the film surface (WRa) is preferably controlled by properly selecting the average particle diameter and the addition amount of the inert particles within the ranges described above.

The biaxially oriented film of the invention preferably has a humidity expansion coefficient $\alpha$h in the transverse direction of the film (and preferably also the machine direction of the film) within a range of from about $0.1 \times 10^{-6}$ to about $13 \times 10^{-6}$ /%RH, preferably from about $0.5 \times 10^{-6}$ to about $11 \times 10^{-6}$ /%RH and, particularly preferably, within a range from about $0.5 \times 10^{-6}$ to about $10 \times 10^{-6}$ /%RH. If the $\alpha$h is too low, the polyolefin (b) may be present in excessive proportions, which may lower the film forming property or deteriorate its mechanical performance. If the $\alpha$h is too high, the film expansion due to humidity change may cause track deviation or the like when used for magnetic recording media. Lower $\alpha$h can be attained by improving the Young's modulus in the direction of measurement by stretching. If the film is not stretched in the width direction, the Young's modulus in the width direction is low and an humidity expansion coefficient within the range described above cannot be achieved.

The biaxially oriented film of the invention preferably has a temperature expansion coefficient $\alpha$t in the transverse direction of the film (and preferably also the machine direction of the film) within a range from about $-10 \times 10^{-6}$ to about $+15 \times 10^{-6}$ /°C, preferably from about $-8 3 \times 10^{-6}$ to about $+10 \times 10^{-6}$ /°C and, particularly, from about $-5-6 \times 10^{-6}$ to about $+5 \times 10^{-6}$ /°C. If $\alpha$t is too low, an irreversible thermal shrinkage may be observed. If $\alpha$t is too high, the film elongation due to temperature change can cause track deviation or the like when used for magnetic recording media. A lower $\alpha$t can be attained by improving the Young's modulus in the measuring direction by stretching and, setting the amount of the polyolefin present to less than the upper limit described above. If the film is not stretched in the transverse direction, the Young's modulus in the transverse direction is low, and a temperature expansion coefficient within the range described above cannot be obtained.

The biaxially oriented film of the invention preferably has a Young's modulus of 5 GPa or more in the transverse (or width) direction (TD) of the film and preferably also in the film forming direction (machine direction (MD)). If the Young's modulus is too low in any one direction, it cannot sometimes endure the applied load when used as magnetic recording media, or it is deformed by the temperature/humidity change even when the dimensional change by the humidity change is small. Further, the sum for the Young's modulus in the MD and TD is preferably no more than 22 GPa, preferably no more than 20GPa, preferably no more than 18GPa. If the sum of the Young's modulus in the MD and TD is too high, then increased stretching factor during film formation can sometimes result in frequent film breakage or decrease the yield of products.

Where the film is used for linear track type magnetic tapes, it is preferred that the Young's modulus in the MD is larger than the Young's modulus in the TD, for the purpose of decreasing elongation in the machine direction. In this regard, the Young's modulus in the MD is preferably 6 GPa or more, preferably 7 GPa or more and particularly 8 GPa or more, and the Young's modulus in the TD is 5GPa or more, preferably 6 GPa or more, and particularly 7GPa or more. In a further embodiment, the Young's modulus in the TD may be larger than the Young's modulus in the MD, for the purpose of strongly decreasing the elongation in the transverse direction, and in this regard the Young's modulus in the TD is preferably 7 GPa or more, preferably 8 GPa or more, and particularly 9 GPa or more, and the Young's modulus in the MD is preferably 5 GPa or more, preferably 6 GPa or more, and particularly 7 GPa or more. Furthermore, it is preferred that the difference of the Young's modulus in the MD and the Young's modulus in the TD is 2 GPa or less, particularly 1 GPa or less. It is also preferred that the Young's modulus in the MD is 6 GPa or more, preferably 7 GPa or more, and particularly 8 GPa or more and the Young's modulus in the TD is 6 GPa or more, preferably 7 GPa or more, and particularly 8 GPa or more, for the purpose of decreasing the elongation in both the machine and transverse directions, particularly wherein the difference between the Young's modulus in the MD and the Young's modulus in the TD is as stated above.

The biaxially oriented film may also have a coating film layer on at least one surface of the outermost layer (hereinafter sometimes referred to as a coating layer). The coating film layer is obtained by coating a coating agent comprising a binder resin and a solvent to a biaxially oriented film. As the binder resin, various kinds of resins of thermoplastic resins or thermosetting resins can be used and they include, for example, polyester, polyimide, polyamide, polyester amide, polyolefin, polyvinyl chloride, poly(meth)acrylic acid ester, polyurethane, and polystyrene, as well as copolymers or mixtures thereof. Among the binder resins, the polyester copolymer is a particularly preferred example. The solvent includes, for example, organic solvents such as toluene, ethyl acetate, and methyl ethyl ketone and mixtures thereof and, further it may be water. The coating film layer may further contain crosslinkers, surfactants and inert particles as the ingredients for forming the coating film. The surfactants include, for example, polyalkylene oxides. In addition to the ingredients described above, the coating film layer may further contain other resins such as melamine resin, flexible polymer, filler, heat stabilizer, weather stabilizer, anti-aging agent, labeling agent, antistatic agent, slipping agent, anti-blocking agent, anti-clouding agent, dye, pigment, natural oil, synthetic oil, wax, emulsifier, hardener, and flame retardant, and the blending ratio is properly selected within such a range to not deteriorate the purpose of the invention.

The method of disposing the coating film layer on the biaxially oriented film may be either a method of coating and drying a coating agent on at least one surface of a biaxially stretched film, or a method of coating a coating agent on a stretchable film, then drying, stretching, and optionally applying a heat treatment. The stretchable film is a non-stretched film, a monoaxially stretched film, or a biaxially stretched film and, among them, a longitudinally stretched film stretched monoaxially in the film extruding direction (longitudinal direction) is particularly preferred.

Further, during the process of coating the coating agent to the film, coating in a clean atmosphere, that is, coating in the film forming step is preferred, which improves the adhesion of the coating agent to the film. In the case of coating to the heat-set film during a usual coating step, that is, in a step separated from the film manufacturing step after biaxial stretching, unwanted dirt or dust tend to be incorporated.

Any known coating method can be used and, for example, a roll coating method, gravure coating method, roll brushing method, spray coating method, air knife coating method, dipping method, and curtain coating method can be used alone or in combination.

The biaxially oriented film of the invention may also be a laminate in which a further layer is laminated on at least one surface with the aim of providing another function. For example, in the case of use as magnetic recording media, a polyester film layer not substantially containing inert particles may be laminated to the surface of the biaxially oriented film of the invention on the side of the magnetic layer in order to render that side a more planar (i.e. smoother) surface. Further, in order to improve the runnability or winding properties of the reverse surface (the non-magnetic layer), a polyester film layer in which the inert particles to be contained are made relatively larger or increased in their amount may be laminated to the surface of the biaxially oriented film of the invention on the side of the non-magnetic layer. Such a laminate film is preferred in that the electromagnetic conversion characteristics and the winding properties of the film can be improved simultaneously without the need for complicated, upstream coextrusion process designed to deliver such an asymmetric structure in one process step.

The biaxially oriented film of the invention has a surface roughness WRa (center surface average roughness) suitable for the desired end-use, and may vary depending on that end-use. For example, in the case of use as magnetic recording media, the surface roughness WRa for a first surface of the biaxially oriented films is preferably from 1 to 10 nm, further, from 2 to 10 nm and, particularly, from 2 to 8 nm. If the surface roughness WRa is too high, the surface of the magnetic layer becomes rough and satisfactory electromagnetic conversion characteristics cannot sometimes be obtained. If the surface roughness WRa is too low, the surface becomes excessively planar (smooth), and then slipping on a pass roll or calendar worsens, sometimes causing wrinkles and failure to coat the magnetic layer or to calendar efficiently. Further, the surface roughness WRa on the second surface may be identical with the WRa of the first surface, or may be larger, for instance from 5 to 20 nm, preferably from 6 to 15 nm, and particularly from 8 to 12 nm, If the surface roughness WRa on the second surface is too large, the unevenness at the surface on the side of the running surface is transferred upon contact to the surface on the side of the magnetic layer to cause a roughening of the surface on the side of the magnetic layer thereby sometimes failing to obtain satisfactory electromagnetic conversion characteristics. On the other hand, if the surface roughness WRa is too low, the surface becomes excessively planar (smooth) and may worsen the slipping on a pass roll or calendar, causing wrinkles and a failure to coat the magnetic layer. It is preferred to make the two surfaces into different forms of surface since the electromagnetic conversion characteristics and the running properties can be controlled more easily. The surface roughness WRa can be controlled by incorporating inert particles in the film, or by a surface treatment forming fine unevenness, for example, by a coating treatment of a coating agent.

The biaxially oriented film of the invention is preferably manufactured using a co-extrusion method. Preferably, starting materials constituting the respective layers are laminated in the molten state by a co-extrusion method in a die and then extruded into a sheet-like shape, or two or more kinds of molten polymers are extruded from a die and laminated, and rapidly quenched to solidify into a laminated non-stretched film and then subjected to biaxial stretching and heat to form a laminated biaxially oriented film. Thus, the non-stretched film can be manufactured initially by using a method of extruding all polymer components using individual extruder machines at a temperature from their respective melting points (Tm °C) to (Tm+70°C), and rapidly cooling to solidify into the non- stretched film. Subsequent stretching in a monoaxial direction (longitudinal direction or transverse direction) by a predetermined factor at a temperature from 80°C to 120°C is performed, followed by stretching at a predetermined factor in the direction perpendicular to the stretching direction described above (in the case where the first step is in the longitudinal direction, the second step is in the transverse direction) at a temperature from 90°C to 150°C and, further, applying a heat treatment. In this case, the stretching factor, the stretching temperature, the heat treatment condition, etc. are selected and decided depending on the desired characteristics of the film, as is known in the art. The area stretching factor is, preferably, from 6 to 35 times preferably by from 15 to 35 times and, further, from 20 to 30 times. The heat-setting temperature is typically within a range from 190 to 250°C and the treatment time is typically within a range from 1 to 60 seconds. Particularly, when heat resistance is necessary, it is preferred to apply a heat-setting in the range from 210 to 240°C in order to improve the dimensional stability at elevated temperatures. By conducting such heat-setting treatment, the heat shrinkage of the obtained biaxially oriented film at 200°C can be from -3.5 to 3.5%, more preferably, from -3 to 3% and, particularly preferably, from 0 to 3%. Further, for suppressing the heat shrinkage, after applying a heat treatment at 150 to 220°C for 1 to 60 sec in an off-line step, an annealing treatment of gradually cooling through a temperature range of from 50 to 80°C may also be employed.

In addition to the sequential biaxial stretching method, a simultaneous biaxial stretching method may also be used. In the sequential biaxial stretching method, the number of stretching stages in the longitudinal direction or the transverse direction is not restricted to one but longitudinal and/or transverse stretching can be conducted several times. For example, when film is produced for use in magnetic recording, and it is intended to improve further the mechanical property, it is preferred to subject the biaxially stretched film before the heat-setting treatment to a further stretching stage in the transverse direction or the longitudinal direction at a temperature higher by 20 to 50°C than the previous stretching temperature thereby setting the total stretching factor to 3.0 to 7.0 times in the longitudinal direction and setting the total stretching factor to 3.0 to 6.0 times in the transverse direction.

In the case of manufacturing nine or more layered laminate film, it can be manufactured, for example, using a simultaneous multi-layer extrusion method using a feed block as proposed in JP-A-2000-326467, paragraph 0028, modified to accommodate three discrete molten streams of polymer. That is, after drying an aromatic polyester (a) constituting the film layer (A) and a polyolefin (b) constituting the film layer (B) and an adhesive material (c) constituting the film layer (C), the polymers are each supplied to an unique extruder heated to about 300°C, and each of the molten products is, for example, laminated alternately by using a feed block, spread in a die and extruded to form a non-stretched laminated film. The as cast multi-layer film is then subjected to biaxial stretching and heat treatment using the same method and under the same conditions as those described herein.

Further, in a case of providing a coating layer, it is preferred to coat a desired coating solution on one surface or both surfaces of the non-stretched film or monoaxially stretched film described above.

The invention further provides a magnetic recording medium comprising the biaxially oriented film described herein as a base film and further comprising a magnetic layer on one surface thereof. The magnetic recording medium is not particularly restricted so long as the biaxially oriented film of the invention is used as the base film and includes, for example, linear track system data storage tapes such as QIC or DLT, and, SDLT or LTO of a further higher capacity type. Since the dimensional change of the base film due to the temperature/humidity change is extremely small, a magnetic recording medium suitable to high density and high capacity causing less track deviation can be provided even when the track pitch is narrowed in order to ensure the high capacity of the tape.

The invention further provides an electronic or opto-electronic device comprising the biaxially oriented film described herein, particularly electronic or opto-electronic devices such as electroluminescent (EL) display devices (particularly organic light emitting display (OLED) devices), electrophoretic displays (e-paper), photovoltaic (PV) cells and semiconductor devices (such as organic field effect transistors, thin film transistors and integrated circuits generally), particularly flexible such devices.

EXAMPLES

The film was characterised using the following methods. The terms "parts" and "%" in the examples mean parts by weight and % by weight, respectively.

*(1) Melting point, glass transition point*

Typically 10 mg of an aromatic polyester (a), a polyolefin (b) or an adhesive material (c) were sealed in an aluminium pan used for measurement, which was heated at a temperature elevation rate of 20°C/min from 25°C to 300°C using a differential scanning calorimeter DSC 2920 (TA instruments Co.) to determine respective melting points (melting point of the aromatic polyester (a) = Tma; melting point of the polyolefin (b) = Tmb; melting point of the adhesive material (c) = Tmc), and glass transition points (glass transition point of the aromatic polyester (a) = Tga; glass transition point of the polyolefin (b) = Tgb; glass transition point of the adhesive material (c) = Tgc).

*(2) Vicat Softening Point, melt index, melting point, glass transition*

When available in published, commercial literature the values of melt flow index (MFI) (ASTM 1238D), Vicat softening point (ASTM 1525D), melting point Tm and glass transition point, Tg (DSC) of the adhesive materials were noted for characterisation and comparison. Melt flow index is typically measured at 190°C on a sample size of 2.16 kg and are specified herein to those measurement conditions, unless otherwise stated. Melt flow index is also referred to as melt index or melt flow rate.

*(3) Coefficient of Humidity Expansion (CHE or αh)*

A film sample is cut out to 15 mm length and 5 mm width such that the width direction of the film is along the measuring direction, which is set to TMA 3000 manufactured by Shinku Riko Inc. and kept in an atmosphere at 30°C at constant humidity 30%RH and humidity 70%RH in a nitrogen atmosphere, the length of the specimen is measured in this case to calculate the humidity expansion coefficient according to the equation (1) described below. The measuring direction is along the longitudinal direction of a specimen and measurement is conducted on the specimens by the number of 10 and the average value thereof is defined as αh where,

$$\alpha h = (L_{70} - L_{30}) / (L_{30} \times \Delta H) \qquad \dots \quad \dots \qquad (1)$$

in which:

$L_{30}$ = specimen length (mm) at 30%RH
$L_{70}$ = specimen length (mm) at 70%RH
$\Delta H = 40 \ (=70-30)\%RH$

*(4) Coeffcient of Temperature Expansion (CTE or αt)*

A film sample is cut out to 15 mm length and 5 mm width such that the width direction of the film is along the measuring direction, which is set to TMA 3000 manufactured by Shinku Riko Inc., applied with a pretreatment in a nitrogen atmosphere (0%RH), at 60°C for 30 min and then the temperature is lowered to the room temperature. Then, the temperature is elevated from 25°C to 70°C at 2°C/min, the specimen length at each temperature is measured and the temperature expansion coefficient (αt) is calculated according to the equation (2) described below. The measuring direction is along the longitudinal direction of the specimen, measurement is conducted 10 specimens and an average value thereof is used.

$$\alpha t = \{ (L_{60} - L_{40}) / (L_{40} \times \Delta T) \} + 0.5 \times 10^{-6} \quad \dots (2)$$

in which:

$L_{40}$ = specimen length (mm) at 40°C
$L_{60}$ = specimen length (mm) at 60°C
$\Delta T = 20 \ (=60-40) \ °C$
$0.5 \times 10^{-6}$ = temperature expansion coefficient of quartz glass

*(5) Young's Modulus*

A film specimen is cut to dimensions 10 mm width and 15 cm length and strained using an Instron type universal tensile tester with a chuck distance of 100 mm, at a deflection of 10 mm/min and a chart speed of 500 mm/min, and the Young's modulus is calculated from the tangent at the rising portion of the curve obtained of load versus elongation. The measuring direction is along the longitudinal direction of the specimen, and the test repeated on ten specimens to obtain an average value.

## (6) Intrinsic Viscosity

Intrinsic viscosity (in units of dL/g) is measured by solution viscometry in accordance with ASTM D5225-98(2003) on a Viscotek™ Y-501C Relative Viscometer (see, for instance, Hitchcock, Hammons & Yau in American Laboratory (August 1994) "The dual-capillary method for modern-day viscometry") by using a 0.5% by weight solution of polyester in o-chlorophenol at 25°C and using the Billmeyer single-point method to calculate intrinsic viscosity:

$$\eta = 0.25\eta_{red} + 0.75(\ln \eta_{rel})/c$$

wherein:

$\eta$ = the intrinsic viscosity (in dL/g),
$\eta_{rel}$ = the relative viscosity,
c = the concentration (in g/dL), &
$\eta_{red}$ = reduced viscosity (in dL/g), which is equivalent to $(\eta_{rel}-1)/c$ (also expressed as $\eta_{sp}/c$ where $\eta_{sp}$ is the specific viscosity).

## (7) Thicknessfor Each Film

A laminate film is cut out to a trigonal shape, fixed in an embedding capsule and then embedded with an epoxy resin. It is cut in the direction parallel with the film forming direction and the direction of the thickness by a microtome (ULTRACUT-S) into a thin slice of 50 nm thickness. Then, it is observed by using a transmission type electron microscope at an acceleration voltage of 1000 kV, photographed at a magnification factor of 10000 to 100000X, and the thickness for each of the layers was measured from a recorded micrograph.

## (8) Peeling Resistance

This was assessed in three separate ways,

i) Manually, by peeling and ranking empirically the effort required to cause delamination. The grading followed the sequence "Very poor" which implied no peel strength, poor, medium, good and very good. "Very good" implied fracture of the individual polymer layers occurred in preference to delamination or peel. The grading range was used principally for Examples 1 to 27 herein and was subsequently found to correlate with a range of from about 0 (very poor) to about 2N/mm or more (very good) adhesive strength.
ii) Quantitatively, in which the energy to peel or separate the laminate was measured according to ASTM D903. Here a strip of multi-layered film, 25mm wide was cut and delaminated initially at one end, each leg or component of which was clamped into a tensile extensometer machine. Peel with a geometry of 180°C was performed by extending the clamps of the extensometer and the load recorded during delamination expressed as adhesive strength in units mN/25mm. The adhesive strength of a layer (A) and a layer (B) with an adhesive interlayer (C) therebetween according to the present invention is preferably at least about 500 mN/25mm, preferably at least about 1000 mN/25mm, preferably at least about 2000 mN/25mm, and preferably at least about 2500 mN/25mm. In the context of the present invention, this adhesive strength is equated to the delamination resistance of the film comprising at least one (A) layer and at least one (B) layer with a layer (C) therebetween as defined herein, such that the delamination resistance is preferably at least about 500 mN/25mm, preferably at least about 1000 mN/25mm, preferably at least about 2000 mN/25mm, and preferably at least about 2500 mN/25mm.
iii) Semi-quantitatively, using a simple peel test, which ranked the degree of adhesion into three groups. To one surface of a sample film, 6 cuts are formed the number of 6 in each of longitudinal and transverse directions at an interval of 2 mm therebetween by a cutter knife to prepare 25 grids. Then, a pressure sensitive adhesive tape of 24 mm width (trade name of products, CELLOTAPE (registered trade mark) manufactured by Nichiban Co.) is appended on both surfaces of the sample film and, after peeling the adhesive tape on the side of the grids rapidly at a peeling angle of 180°, the peeled surface was observed and evaluated by the following criteria:

a: adhesion between layers is satisfactory, with no peeled area,
b: adhesion between the layers is poor with less than 20% of peeled area

c: adhesion between the layers is extremely poor, with more than 20% of peeled area

*(9) Film Forming and Quality*

The ability of the polymeric materials to process successfully and produce film of high quality was assessed by inspection and principally on the surface quality of the tie-layer material of cast film. Examples of two-layer coextruded film were produced in which the coextruded layer comprised the adhesive material and the main layer comprised an aromatic polyester (a) or the polyolefin (b). When examined, this was graded as "good" when the coextruded layer showed even thickness profile across the width of the film, a homogeneous consistency and a smooth surface quality. "Medium" applied to the same coextruded layer which showed less perfect features, but was still generally spread across the width of the film, showed some inhomogeneity in the bulk of the material and a smooth but irregular surface quality. Finally the description of "poor" was used to describe the film quality when the tie layer material did not deposit across the full width of the coextruded film, the material was clearly inhomogeneous and the surface was severely disrupted, for example as a result of outgassing from the melt or other side reactions.

*(10) Track Deviation*

After recording at a temperature and humidity of 10°C and 10% RH using a driving unit, LTO1 manufactured by Hewlett-Packard Co., a magnetically coated tape from the film of this invention was rerun under a temperature and humidity of 30°C and 80% RH and a track deviation width of the magnetic tape to the magnetic head due to the change of temperature and humidity measured. A smaller absolute value for the deviation width means a better property.

*(11) Centre surface average roughness (WRa)*

A center surface average roughness (WRa) is determined according to the equation (3) described below using a non-contact 3-dimensional roughness meter (NT-2000) manufactured by WYKO Co., under the conditions at a measuring factor of 25, a measuring area of 246.6 $\mu$m x 187.5 $\mu$m (0.0462 mm$^2$) by a surface analysis software incorporated in the roughness meter. Measurement is repeated 10 times and an average value thereof is used.

$$WRa = \sum_{k=1}^{M} \sum_{j=1}^{N} \ |Z_{jk} - \bar{Z}| \ / \ (M \cdot N) \qquad (3)$$

in which

$$\bar{Z} = \sum_{k=1}^{M} \sum_{j=1}^{N} \ Z_{jk} \ / \ (M \cdot N)$$

Zjk is a height on the three dimensional roughness chart at the jth and kth positions when the measuring direction (246.6 $\mu$m) and the direction perpendicular thereto (187.5 $\mu$m) are divided by M and divided by N, respectively.

*(12) Average Particle Diameter of Inert Particles*

Measurement is conducted by using a CP-50 type Centrifugal Particle Size Analyzer manufactured by Shimazu Seisakusho Co. From an accumulation curve for the particle diameter of each particle and the existent amount thereof calculated based on the obtained centrifugal settling curve, a particle diameter corresponding to 50 mass% is read and the value is defined as the average particle diameter.

*(13) Thermal Stability*

A Stanton Thermogravimetric Analyser (model STA 1500A) was used to heat specimens of mass 20mg in a platinum pan from 20°C to 300°C at a rate of 10°C/minute, then to 310°C at a rate of 3.5°C/minute and then to hold at 310°C for a period of 10 minutes under a dry nitrogen atmosphere.
The following polymers were used in the examples:

Polyester 1

An aromatic polyester, polyethylene terephthalate (PET), was prepared as follows. After conducting ester exchange reaction for dimethyl terephthalate and ethylene glycol by a customary method under the presence of manganese acetate, triethyl phosphono acetate was added. Then, antimony trioxide was added and polycondensation was conducted to obtain a PET resin with intrinsic viscosity 0.62.

Polyester 2

A further aromatic polyester, polyethylene-2,6-nahpthalene (PEN), was prepared as follows. After conducting ester exchange reaction for dimethyl naphthalene-2,6-dicarboxylate and ethylene glycol by a customary method under the presence of manganese acetate, triethyl phosphono acetate was added. Then, antimony trioxide was added and polycondensation was conducted to obtain a PEN resin with intrinsic viscosity 0.67.

Polyester 3

A further aromatic polyester, polyethylene-2,6-nahpthalene (PEN), was prepared as follows. After conducting ester exchange reaction for dimethyl naphthalene-2,6-dicarboxylate and ethylene glycol by a customary method under the presence of manganese acetate, triethyl phosphono acetate was added. Then, antimony trioxide was added and polycondensation was conducted to obtain a PEN resin with intrinsic viscosity 0.58.
Examples 1 to 27 are not examples of multi-layer films according to the invention as claimed.

## Example 1

A film comprising two layers was extruded and cast using a standard melt coextrusion system. The coextrusion system was assembled using two independently operated extruders which fed separate supplies of polymeric melt to a standard coextrusion block or junction at which these streams were joined. The melt was thereafter transported to a simple, flat film extrusion die which allowed the melt curtain to be cast and quenched in temperature onto a rotating, chilled metal drum. One layer comprised the PET Polyester 1, which was extruded and cast from the common die at a set process temperature of 275°C. The second coextruded layer comprised the material Bynel 21E533 (a similar grade is available as Bynel 21 E830). The Bynel material was processed at extruder temperatures of 260°C and finally cast from the coextrusion die at 275°C. The cast film was collected at a process speed of about 1.8 m/min and was approximately 150mm in width. The total thickness of the film was around $550\mu m$ of which the PET layer was approximately $400\mu m$ and the Bynel adhesive layer was approximately $150\mu m$.

## Examples 2 to 10

In each of these examples, a film was manufactured as described in example 1, except that the material Bynel 21E533 was replaced by: Bynel 41E865; Bynel 3861; Lotader AX 8900; Lotader 3210; Lotader 4210; Kraton FG1901X; Kraton 1924X; Nucrel 0908HS; and Admer SE810, respectively. Lotader grades were supplied by Arkema Chemical Company. Kraton grades were supplied by Kraton Polymers Company. Bynel and Nucrel grades were supplied by E. I. DuPont de Nemours. Admer grades were supplied by the Mitsubishi Chemical Company.

## Example 11

A film was manufactured as described in example 1 except that the aromatic polyester was instead the PEN Polyester 2. The PEN material was extruded and cast from the common die at set process temperature of 285°C. The second coextruded layer of Bynel 21 E533 was processed at extruder temperatures of 260°C and finally cast from the coextrusion die at 285°C. The cast film was collected under conditions similar to those in Example 1 and possessed similar dimensions, namely a total thickness of $550\mu m$ of which the PEN layer was approximately $400\mu m$ and the Bynel adhesive layer was approximately $150\mu m$.

## Examples 12 to 18

In each of these examples, a film was manufactured as described in example 11, except that the material Bynel 21E533 was replaced by: Bynel 41E865; Bynel 3861; Lotader AX 8900; Lotader 3210; Lotader 4210; Kraton FG1901X; and Admer SE810, respectively.

### Example 19

A film was manufactured as described in example 1 except that the PET was replaced by the hydrocarbon polymer syndiotactic polystyrene (sPS). In this example, the sPS material was extruded and cast from the common die at set process temperature of 300°C. The second coextruded layer of Bynel 21E533 was processed at extruder temperatures of 275°C and finally cast from the coextrusion die at 300°C. The cast film was collected under conditions similar to those in example 1 possessed similar dimensions.

### Examples 20 to 27

In each of these examples, a film was manufactured as described in example 19, except that the material Bynel 21E533 was replaced by: Bynel 41 E865; Bynel 3861; Lotader AX 8900; Lotader 3210; Lotader 4210; Kraton FG1901X; Kraton 1924X; and Admer SE810, respectively.

Table 1 characterises the coextruded films of examples 1 to 27 in terms of (i) the level of peel resistance by the two layers, and (ii) the quality of the film layers cast under standard film forming conditions.

Table 2 describes the compositions of the coextruded layer 2 in examples 1-27.

**Table 1: Two Layer Coextruded Film**

| Ex. | Coextruded Layer 1 | Coextruded Layer 2 | Resistance to Peel | Film Quality |
|---|---|---|---|---|
| 1 | PET | Bynel 21E 533/830 | Very Good | Very Good |
| 2 | PET | Bynel 41 E865 | Good | Medium |
| 3 | PET | Bynel 3861 | Medium | Good |
| 4 | PET | Lotader AX 8900 | Very Good | Poor |
| 5 | PET | Lotader 3210 | Very Good | Poor |
| 6 | PET | Lotader 4210 | Very Good | Very Poor |
| 7 | PET | Kraton FG1901X | Good | Poor |
| 8 | PET | Kraton 1924X | Medium | Poor |
| 9 | PET | Nucrel 0908HS | Very Poor | Medium |
| 10 | PET | Admer SE810 | Very Good | Good |
| 11 | PEN | Bynel 21E533/830 | Good | Good |
| 12 | PEN | Bynel 41 E865 | Good | Poor |
| 13 | PEN | Bynel 3861 | Good | Good |
| 14 | PEN | Lotader AX 8900 | medium | Medium |
| 15 | PEN | Lotader 3210 | Very Good | Poor |
| 16 | PEN | Lotader 4210 | Very Good | Very Poor |
| 17 | PEN | Kraton FG1901X | Medium | Poor |
| 18 | PEN | Admer SE810 | Very Good | Medium |
| 19 | sPS | Bynel 21E533/830 | Medium | Good |
| 20 | sPS | Bynel 41 E865 | Good | Poor |
| 21 | sPS | Bynel 3861 | Good | Medium |
| 22 | sPS | Lotader AX 8900 | Good | Good |
| 23 | sPS | Lotader 3210 | Very Poor | Poor |
| 24 | sPS | Loader 4210 | VeryPoor | Very Poor |
| 25 | sPS | Kraton FG1901X | Medium | Poor |
| 26 | sPS | Kraton 1924X | Medium | Poor |

(continued)

| Ex. | Coextruded Layer 1 | Coextruded Layer 2 | Resistance to Peel | Film Quality |
|-----|--------------------|--------------------|--------------------|--------------|
| 27  | sPS                | Admer SE810        | Medium             | Good         |

Table 2: Composition Summary Table

| ADHESIVE | VICAT Softening Point (°C) | MFI (g/10min) | COMPOSITION (%wt) | | | | | | | | | STRUCTURE | FILMABILITY on PET/PEN/sPS | Adhesion to PET/PEN/sPS |
|---|---|---|---|---|---|---|---|---|---|---|---|---|---|---|
| | | | Styrene | Ethylene | Propylene | Butadiene | Acrylate (Me or Bu) | Butene | GMA | MAnH | MAA | | | |
| Bynel 21E533 | 50 | 7.7 | | 92 | | | 8 | | | 1 | | graft MAnH | VG/G/G | VG/G/M |
| Bynel 21E830 | 50 | 7.5 | | 92 | | | 8 | | | 1 | | graft MAnH | VG/G/G | VG/G/M |
| Bynel 41E865 | 82 | 4.7 | 17 | 67 | | 16 | | | | 1 | | graft MAnH | M/P/P | G/G/G |
| Bynel 3861** | 56 | 2.0 | | 75 | | | 25* | | | 1 | | graft MAnH | G/G/M | M/M/G |
| Lotader AX8900 | <40 | 6 | | 68 | | | 24 | | 8 | | | n/a | P/M/G | VG/M/- |
| Kraton 1901 | | 22*** | 30 | 68*** | | | | | | 1.7 | | graft MAnH | P/-/N | G/M/M |
| Kraton 1924 | | 40*** | 13 | 86**** | | | | | | 1 | | graft MAnH | P/P/P | M/-/M |
| Nucrel | 80 | 8 | | 91 | | | | | | | 9 | n/a | M/-/- | VP/-/- |
| Admer SE810 | 40 | 7.20 | | 65-75 | 20-30 | | | 1-5 | | 0.5-1 | | graft MAnH | G/M/G | VG/VG/M |
| Lotader 3210 | 76 | | | 91 | | | 6 | | | 3.1 | | Copol MAnH | P/P/P | G/G/VP |
| Lotader 4210 | | | | 90 | | | 6.5 | | | 3.6 | | Copol MAnH | VP/VP/VP | G/G/VP |

GMA = glycidyl methacrylate
MAnH = maleic anhydride
MAA = methacrylic acid
Copol = incorporated into the polymer backbone by means of copolymerisation
Graft = incorporated onto the polymer backbone by means of post treatment of copolymer
* 25% vinyl acetate ** Decomposed above 260°C *** Measured at 230°C on a sample size of 5 kg
**** ethylene component is a mixture of ethylene and butylene comonomers

It is the inventors' understanding that the grafted maleic anhydride (MAnH) groups in the adhesive layer material chemically react (under conditions of high temperature and in the molten state) with the polyester. It is known that copolymers comprising units of glycidyl methacrylate (GMA) perform in a similar way when melt-blended with polyester materials, forming chemical bonds between the polymeric components. As a result of these chemical reactions, such reactive moieties will show adhesion across a phase boundary between a non-polar hydrocarbon polymer and a condensation polymer such as a polyester, as is demonstrated by examples 1 to 18. Thus, examples 1 to 8 and 10 to 18 show positive adhesion results when such materials are coextruded with polyester, while very poor adhesion is observed only when no MAnH or GMA is present in a similar coextruded copolymer (example 9).

According to conventional practice in the art, when interaction between a hydrocarbon polymeric material and a maleic anhydride-containing group is desired, it is necessary to include a free radical initiator during melt processing (Krumpa et al., Polym. Test., 24, 129 (2005)), and it has been reported that there is no chemical reaction between a hydrocarbon based polymeric material and the MAnH or GMA-modified materials in Table 1 (M Lia et al., Polymer, 43, 5455 (2002); & Y Po et al., Polymer 37, 5653 (1996)), as there is between polyester and such materials. Thus, the adhesion between sPS and the adhesive polymeric materials in examples 19 to 27 would be expected to be very poor and, indeed, none of these commercially available materials have been proposed for use with aromatic hydrocarbons such as polystyrene, PS or syndiotactic polystyrene, sPS. The resistance to peel observed for, at least, examples 19, 21 to 24 and 27 is therefore unexpectedly high, and counter to the current understanding of the interaction between the materials concerned. On the other hand, the resistance to peel observed in examples 20, 25 and 26 is not surprising. Bynel 41E865 and the Kraton grades partly comprise polystyrene and an interaction across the layer boundary which arises from partial mixing in the melt would be expected to provide macroscopic adhesion between the materials.

Thus, the experiments identify a novel and surprising set of tie-layer forming, adhesive materials according to their chemical composition which exhibit unexpected adhesion to both hydrocarbon polymer (i.e. polyolefin) and polyester.

However, as well as imposing the appropriate degree of adhesion between adjacent layers of a multi-layer film, a tie-layer must also show compatibility with the process conditions employed in manufacture of the film, and thus possess the appropriate thermal stability and rheology at extrusion and process temperatures.

The adhesive layer materials in Table 1 which are within the scope of the present invention are Bynel 21E533, Bynel 21E830, Bynel 3861 and Admer SE810. It is unexpected that these adhesive materials perform to the level of medium or better, in terms of both peel resistance and film quality, for both polyester and hydrocarbon substrates.

The materials were tested for thermal stability according to the test method described herein, and the results are shown in Table 3 below.

**Table 3**

| Sample ID | % Weight Loss after 10mins at 310°C |
| --- | --- |
| Bynel 3861 | 6.0 |
| Bynel 21E533 | 2.2 |
| Admer SE810 | 1.0 |

The thermal treatment also resulted in some foaming from the Bynel 3861 sample, which was not observed for the other samples. The test demonstrates the particular advantage of the Bynel 21E533, Bynel 21E830 and Admer SE810 materials in the present invention.

The following further experiments were conducted.

**Control Examples 1 and 2**

A two-layer coextruded film was manufactured as described in example 19, except that the material Bynel 21E533 was replaced by a physical mixture of PET Polyester 1 and Admer SE810. In control example 1 the ratio in the mixture was 9:1 wt/wt respectively, and in control example 2 the ratio was 8:2 wt/wt respectively.

**Control Example 3**

A two-layer coextruded film was manufactured as described in example 19, except that one layer comprised a physical mixture of PET Polyester 1 and Admer SE810 (8:2 wt/wt respectively), and that the second coextruded layer comprised a physical mixture of the olefinic material (sPS) and Admer SE810 (8:2 wt/wt respectively).

**Control Example 4**

A two-layer coextruded film was manufactured as described in control example 3, except that one layer comprised a physical mixture of the PET Polyester 1 and Bynel 21E533 (8:2 wt/wt respectively), and that the second coextruded layer comprised a physical mixture of the olefinic material (sPS) and Bynel 21E533 (8:2 wt/wt respectively).

Table 4 characterises the coextruded film control examples 1 to 4 in terms of peel resistance of the film and the quality of the film layers cast under standard film forming conditions.

**Table 4: Two Layer Coextruded Film**

| CE | Coextruded Layer 1 | Coextruded Layer 2 | Resistance to Peel | Film Quality |
|----|--------------------|--------------------|--------------------|--------------|
| 1 | PET + Admer (9:1) | sPS | Poor | Good |
| 2 | PET + Admer (8:2) | sPS . | Poor | Good |
| 3 | PET + Admer (8:2) | sPS + Admer (8:2) | Medium | Good |
| 4 | PET + Bynel 21E533 (8:2) | sPS + Bynel 21E533 (8:2) | Poor | Good |

The data in table 4 reveal that to achieve only a medium level of adhesion, the two most effective adhesive materials identified in table 1, must be present as a blend at levels of 20% by wt in both the polyester and polyolefin layer. In addition, such multi-layer films exhibit disadvantages such as the compromise in modulus of the film, which in turn deteriorates its coefficient of thermal and humidity expansion. Similarly the quality of the film surface, which may be critical to the applications described herein (particularly magnetic recording media, in which a magnetic layer is disposed on a film surface), is fundamentally compromised by the phase separated morphology of the blends.

**Example 28**

A film comprising three layers of polymeric material was extruded and cast using a standard melt coextrusion system. The coextrusion system was assembled using three independently operated extruders which fed separate supplies of polymeric melt to a standard coextrusion block or junction at which these streams were joined. The melt was thereafter transported to a simple, flat film extrusion die which allowed the melt curtain to be cast and quenched in temperature onto a rotating, chilled metal drum. One layer comprised the PEN Polyester 2. The second coextruded layer comprised the material Bynel 21E533 and the third comprised syndiotactic polystyrene (sPS; Idemitsu Chemical). The coextrusion configuration was designed in order that the middle layer comprised Bynel 21E533. After collection from the chilled metal casting drum, the film was reheated and further treated by stretching in the forward or machine direction (to a stretch ratio x3) and in the sideways or transverse direction (to a stretch ratio x4). The film thickness was drawn down to values 20-25 $\mu$m and the process completed by heat-setting, that is heating the biaxially stretched film to an elevated temperature to induce further crystallisation of the polyester and sPS layer. The final heat set stage was performed at an oven temperature of 220°C.

**Example 29**

A film was manufactured as described in example 28, except that Bynel 21 E533 was replaced by Admer SE810, and in which the film was stretched in the forward direction to a stretch ratio x3, and in the sideways direction to a stretch ratio x5.5.

**Examples 30 - 35**

A film was manufactured as described in example 29, except that the relative thicknesses of the layers were different, which was achieved by adjustment of the relative outputs of the three extrusion systems.

**Example 36**

A film comprising five layers of polymeric material was extruded and cast using a standard melt coextrusion system coupled to a multi-manifold die system. The entire extrusion system was assembled by connecting two independently operated extruders which fed separate supplies of polymeric melt to a standard coextrusion block or junction at which these streams were joined. Prior to the coextrusion junction, one stream of melt was split and fed to two ports of the junction, which provided a common melt channel comprising three distinct streams. The melt was thereafter transported to a simple, flat film extrusion die equipped with a multi-manifold die-lip system. This allowed the third melt stream, delivered using a further independently operated extruder, to be introduced at either side of the composite melt stream from the die-body. The final melt curtain, which thus comprised 5 distinct layers of polymeric melt material was cast and quenched in temperature onto a rotating, chilled metal drum. The cast film had an ACBCA structure where A = PEN; B = sPS; and C = Admer SE810. After collection from the chilled metal casting drum, the film was reheated and further treated by stretching in the forward or machine direction (to a stretch ratio x3) and in the sideways or transverse direction (to a stretch ratio x5.25). The film thickness was drawn down to 20 $\mu$m and the process completed by heat setting the biaxially stretched film at a temperature of 220°C.

**Example 37 - 39**

A film was manufactured as described in example 36, except that the relative thicknesses of the layers were different, which was achieved by adjustment of the relative outputs of the three extrusion systems.

**Example 40**

A film was manufactured as described in example 36, except that the film was stretched in the forward direction to a stretch ratio x3 and in the sideways direction to a stretch ratio x2.9

**Example 41**

A film was manufactured as described in example 36, except that the Admer SE810 was replaced by Bynel 21E533, and in which the film was stretched in the forward direction to a stretch ratio x3 and in the sideways direction to a stretch ratio x3.2.

**Example 42 - 48**

A film was manufactured as described in example 41, except that the relative thicknesses of the layers were different, which was achieved by adjustment of the relative outputs of the three extrusion systems, and in which the film was stretched biaxially to ratios of approximately x3 and x5.

**Example 49**

A film was manufactured as described in example 36, in which the Admer SE810 was replaced by Bynel 21E830, and in which the film was stretched in the forward to a stretch ratio x3 and in the sideways direction to a stretch ratio x5.5.

**Examples 50 to 54**

A film was manufactured as described in example 49, except that the relative thicknesses of the layers were different, which was achieved by adjustment of the relative outputs of the three extrusion systems, and in which the stretch ratios also were adjusted according to table 5.

The data in Table 5 characterise the coextruded films in examples 28 to 54.

It was observed during the delamination/peeling tests, that failure occurred at the boundary between the tie-layer and the sPS layer, and that the adhesive (peel) strength varied as a function of the observed thickness of the tie-layer. The data in Table 5 therefore demonstrate that:

(i) the tie-layer materials identified (in Examples 1 to 27) as unexpectedly effective at providing adhesion to both polyester and polyolefin, provide similarly effective adhesion between layers of such materials which have been stretched biaxially and crystallised by heat, and

(ii) the strength of adhesion between layers of such materials which have been stretched biaxially is related to the thickness of the tie-layer.

Inspection of table 5 also shows the dependence of coefficient of linear thermal expansion (CTE) on both the %PEN content in the films and the ratio to which the film is stretched during manufacture. An analogous correlation exists between the value of CHE in the multi-layer film and its process history. Higher stretch ratios (which will increase the modulus of the laminate) also serve to improve its CHE in the same direction. Moreover, the CHE of the laminate is similarly improved when higher levels of sPS are present in its composition.

Thus, the present invention provides multi-layer film structures which simultaneously exhibit dimensional stability during changes in temperature and humidity or moisture content (CTE and CHE), as well as mechanical integrity against delamination. The multi-layer films of the present invention are therefore suitable in applications such as: base films for magnetic recording media; magnetic recording media for use in data storage; backplanes in flexible electronics and display devices; and other applications such as those described herein where exacting requirements of dimensional stability are critical.

Table 5

| Ex. | Film Structure | Tie-Layer (C) | Relative Amounts PEN:sPS:C | | | Stretch Ratios MD x TD | CTE, ppm/°C | | CHE, ppm/%RH | | Young's Modulus kg/mm² | | Adhesive Strength, mN/25mm | Tie layer thickness, μm |
|---|---|---|---|---|---|---|---|---|---|---|---|---|---|---|
| | | | % PEN | % sPS | % C | | MD | TD | MD | TD | MD | TD | | |
| 28 | ACB | Bynel 21E533 | 45 | 9 | 45 | 3.0 x 4.0 | 27.9 | 13.7 | 11 | 6.8 | 199 | 265 | not delaminated | 20.6 |
| 29 | ACB | Admer SE810 | 35.8 | 60.1 | 2.5 | 3.0 x 5.5 | | | | | | | 1755.8 | 0.395 |
| 30 | ACB | Admer SE810 | 33.5 | 62 | 2.8 | 3.0 x 5.5 | | | | | | | 1102.5 | 0.295 |
| 31 | ACB | Admer SE810 | 29.7 | 65.2 | 5.1 | 3.0 x 5.5 | | | | | | | >4000 | 0.8 |
| 32 | ACB | Admer SE810 | 37 | 60 | 3.1 | 3.0 x 5.5 | | | | | | | 1163.8 | 0.23 |
| 33 | ACB | Admer SE810 | 28.5 | 65 | 6.5 | 3.0 x 5.5 | | | | | | | >4000 | 1.1 |
| 34 | ACB | Admer SE810 | .37.8 | 55.5 | 6.7 | 3.0 x 5.5 | | | | | | | >4000 | 0.45 |
| 35 | ACB | Admer SE810 | 31.3 | 59.8 | 8.9 | 3.0 x 5.5 | | | | | | | >4000 | 1.37 |
| 36 | ACBCA | Admer SE810 | 59 | 38 | 3 | 3.0 x 5.25 | 35 | 10 | 8.79 | 5.42 | 429 | 767 | 1020.8 | 0.16 |
| 37 | ACBCA | Admer SE810 | 54 | 43 | 3 | 3.0 x 5.25 | 34.7 | 10.1 | 7.99 | 4.9 | 439 | 721 | 980 | 0.16 |
| 38 | ACBCA | Admer SE810 | 57 | 42 | 1 | 3.0 x 5.25 | 36.6 | 7.8 | 8.53 | 4.98 | 436 | 786 | 661.5 | 0.08 |
| 39 | ACBCA | Admer SE810 | 51 | 43 | 6 | 3.0 x 5.25 | 41.6 | 6.92 | 7.97 | 4.81 | 514 | 746 | 1225 | 0.28 |
| 40 | ACBCA | Admer SE810 | 48 | 44 | 7 | 3.0 x 2.9 | 21.4 | 26 | 6.1 | 5.8 | 586 | 550 | >4000 | 2.4 |

| Ex. | Film Structure | Tie-Layer (C) | Relative Amounts PEN:sPS:C | | | Stretch Ratios MD x TD | CTE, ppm/°C | | CHE, ppm/%RH | | Young's Modulus kg/mm² | | Adhesive Strength, mN/25mm | Tie layer thickness, μm |
|---|---|---|---|---|---|---|---|---|---|---|---|---|---|---|
| | | | % PEN | % sPS | % C | | MD | TD | MD | TD | MD | TD | | |
| 41 | ACBCA | Bynel 21E533 | 30 | 53 | 16 | 3.0 x 3.2 | 42.8 | 23.7 | 5.1 | 3.6 | 289 | 381 | | |
| 42 | ACBCA | Bynel 21E533 | 41 | 39 | 20 | 5.0 x 3.0 | 17.9 | 39 | 3.9 | 5.9 | 442 | 276 | | |
| 43 | ACBCA | Bynel 21E533 | 30 | 53 | 16 | 5.0 x 3.0 | 24.5 | 53.3 | 2.2 | 4.5 | 415 | 299 | | |
| 44 | ACBCA | Bynel 21E533 | 26 | 55 | 19 | 5.0 x 3.0 | 26.1 | 57.5 | 1.9 | 2.7 | 350 | 240 | | |
| 45 | ACBCA | Bynel 21E533 | 47 | 43 | 10 | 3.0 x 5.5 | 41.2 | 7.75 | 7.46 | 4.3 | 376 | 711 | 1755.8 | 0.45 |
| 46 | ACBCA | Bynel 21E533 | 59 | 33 | 8 | 3.0 x 5.5 | 37.4 | 7.83 | 8 | 4.4 | 404 | 713 | 857.5 | 0.45 |
| 47 | ACBCA | Bynel 21E533 | 58 | 36 | 5 | 3.0 x 5.5 | 34.6 | 7.34 | 8.71 | 4.9 | 407 | 750 | 1584.3 | 0.24 |
| 48 | ACBCA | Bynel 21E533 | 51 | 43 | 6 | 3.0 x 5.5 | 36.7 | 7.42 | 8.04 | 4 | 411 | 748 | 522.7 | 0.23 |
| 49 | ACBCA | Bynel 21E830 | 42 | 48 | 10 | 3.0 x 5.5 | 40.4 | 8.4 | 6.24 | 3.5 | 393 | 670 | 1837.5 | 0.44 |
| 50 | ACBCA | Bynel 21E830 | 55 | 42 | 3 | 3.0 x 3.6 | 40.8 | 12.5 | 9 | 5.4 | 421 | 650 | 2100 | 0.32 |
| 51 | ACBCA | Bynel 21E830 | 55 | 42 | 3 | 3.0 x 4.1 | 41.4 | 8.9 | 8.9 | 3.7 | 409 | 704 | 1150 | 0.32 |
| 52 | ACBCA | Bynel 21E830 | 39 | 52 | 9 | 3.0 x 5.5 | 41.9 | 11.2 | 5.9 | 3.5 | 395 | 669 | | |
| 53 | ACBCA | Bynel 21E830 | 58 | 36 | 7 | 3.0 x 5.5 | 33.9 | 8.5 | 9.2 | 6.1 | 466 | 717 | >4000 | 1.25 |

| Ex. | Film Structure | Tie-Layer (C) | Relative Amounts PEN:sPS:C | | | Stretch Ratios MD x TD | CTE, ppm/°C | | CHE, ppm/%RH | | Young's Modulus kg/mm$^2$ | | Adhesive Strength, mN/25mm | Tie layer thickness, μm |
|---|---|---|---|---|---|---|---|---|---|---|---|---|---|---|
| | | | % PEN | % sPS | % C | | MD | TD | MD | TD | MD | TD | | |
| 54 | ACBCA | Bynel 21E830 | 71 | 27 | 2 | 3.0 x 5.0 | 28.1 | 6.3 | 10.7 | 6.7 | 461 | 657 | | |

**Claims**

1. A multi-layer biaxially oriented film comprising a first layer (A) comprising an aromatic polyester (a) and a second layer (B) comprising a polyolefin (b) having a melting point of from 230 to 290°C wherein said polyolefin is a styrene polymer, and an adhesive interlayer (C) between a layer (A) and a layer (B), wherein said adhesive interlayer (C) comprises a tie-layer material (c) selected from anhydride-modified ethylene copolymers in which the proportion of anhydride present in the copolymer is no more than 3.0 % by weight of the polymer, and in which the ethylene copolymer comprises one or more additional comonomers other than styrene.

2. A film according to claim 1 wherein said one or more additional comonomers are selected from comonomers other than vinyl aromatic compounds.

3. A film according to claim 1 or 2 wherein said anhydride is maleic anhydride.

4. A film according to any of claims 1 to 3 wherein said anhydride is grafted onto the copolymer backbone.

5. A film according to any of claims 1 to 4 wherein said anhydride is present in the copolymer at no more than 2.5 % by weight of the copolymer.

6. A film according to any of claims 1 to 5 wherein said anhydride-modified ethylene copolymer comprises ethylene at a weight percent level in the range from 40% to 95%.

7. A film according to any of claims 1 to 6 wherein said anhydride-modified ethylene copolymer further comprises one or more of the following comonomers:

    (i) propylene, preferably at a weight percent level of from 0 to 40%;
    (ii) butene, preferably at a weight percent level of from 0 to 5%;
    (iii) acrylate ester as the methyl, ethyl, propyl or butyl ester, preferably at a weight percent level of from 0 to 15%;
    (iv) vinyl acetate, preferably at a weight percent level of from 0 to 30%; and
    (v) maleic anhydride, preferably at a weight percent level of up to 3%.

8. A film according to any of claims 1 to 7 wherein said anhydride-modified ethylene copolymer is an anhydride-modified ethylene acrylate polymeric resin, preferably wherein the ethylene units are present in amounts of from 90% to 95% by weight; the acrylate units are present in amounts of from 5% to 10% by weight; and the anhydride units are present in amounts of from 0.1% to 2% by weight.

9. A film according to any of claims 1 to 7 wherein said anhydride-modified ethylene copolymer is an anhydride-modified ethylene vinyl acetate copolymer, preferably wherein the ethylene units are present in amounts of from 70% to 80% by weight; the vinyl acetate units are present in amounts of from 20% to 30% by weight; and the anhydride units are present in amounts of from 0.1% to 2% by weight.

10. A film according to any of claims 1 to 7 wherein said anhydride-modified ethylene copolymer comprises one or more additional alkene monomeric repeating units, preferably selected from propylene and butene, and preferably both propylene and butene are present in the copolymer.

11. A film according to claim 10 wherein the ethylene units are present in amounts of from 60% to 80% by weight; said one or more additional alkene monomeric repeating units are present in an amount of from about 20% to about 40% by weight, preferably wherein propylene units are present in an amount from about 30% to about 40%, and butene units are present in an amount from about 0.5% to about 2.5%; and the anhydride units are present in amounts of from 0.1% to 2% by weight.

12. A film according to any preceding claim wherein said anhydride-modified ethylene copolymer exhibits a Vicat softening temperature measured according to ASTM D1525 in the range 30°C to 70°C; and/or a melt flow index (MFI) of 4 to 10 g/10 minutes measured according to ASTM D1238; and/or exhibits a weight loss of no more than 5% when heated isothermally at 310°C, under an atmosphere of nitrogen, for a period of 10 minutes.

13. A film according to any preceding claim wherein said aromatic polyester (a) is polyethylene-2,6-naphthalene dicarboxylate.

14. A film according to any preceding claim wherein said polyolefin is a styrene polymer selected from polystyrene, poly(alkylstyrene)s and poly(arylstyrene)s.

15. A film according to any of claims 1 to 13 wherein said polyolefin is selected from polystyrene, polymethylstyrene, polydimethylstyrene, and polybutylstyrene.

16. A film according to any of claims 1 to 13 wherein said polyolefin is a styrene polymer having a syndiotactic structure.

17. A film according to claim 16 wherein said syndiotactic styrene polymer is selected from polystyrene, poly(alkylstyrene)s and poly(arylstyrene)s, preferably wherein said poly(alkylstyrene) is selected from poly(methyl)styrene, poly(ethylstyrene), poly(propylstyrene) and poly(butylstyrene), and preferably wherein said poly(arylstyrene) is poly(phenylstyrene), and preferably wherein said syndiotactic styrene polymer is selected from polystyrene, poly(p-methylstyrene), poly(m-methylstyrene), and poly(p-tertiary butylstyrene).

18. A film according to any preceding claim wherein the weight ratio of polyolefin (b) to total film weight is from 2 to 60% by weight.

19. A film according to any preceding claim comprising at least one further polyester layer, at least one further polyolefin layer, and at least one further adhesive interlayer, wherein an adhesive interlayer is present between any adjacent polyester and polyolefin layers.

20. A film according to any preceding claim wherein the layer structure of the film is selected from:

> (i) a 3-layered structure of layer sequence ACB;
> (ii) a 5-layered structure of layer sequence ACBCA; and
> (iii) a multi-layered structure having 9 or 13 or more layers, and preferably no more than 51 layers, preferably no more than 25 layers, wherein layers (A) and layers (B) are arranged alternately with an intermediate layer of film layer (C) therebetween such that the layer sequence is [...ACBCACBCA...].

21. A film according to any preceding claim having at least 5 layers wherein the outer layer is a layer (A).

22. A film according to any preceding claim wherein the thickness of the or each adhesive interlayer (C) is from 0.05 $\mu$m to 2.5 $\mu$m, preferably from 0.1 $\mu$m to 1.5$\mu$m

23. A film according to any preceding claim wherein the total film thickness is from 1 to 10 $\mu$m.

24. A film according to any preceding claim comprising 5 layers with the layer sequence ACBCA, wherein the total thickness of the film is from 4 to 6 $\mu$m, and wherein the thickness of each layer (C) is from about 0.4 to about 0.5 $\mu$m, preferably wherein the thickness of each polyester layer (A) is about twice the thickness of the polyolefin layer (B).

25. A film according to any of claims 1 to 22 wherein the total film thickness is within the range of from about 5 to about 350 $\mu$m.

26. A film according to any preceding claim wherein the humidity expansion coefficient in the transverse direction of the film is from $0.1 \times 10^{-6}$ to $13 \times 10^{-6}$ %/RH%, and/or wherein the temperature expansion coefficient in the transverse direction of the film is from $-5 \times 10^{-6}$ to $15 \times 10^{-6}$ %/°C, and/or wherein the Young's modulus both in the transverse direction and in the machine direction of the film is 5 GPa or more, and preferably wherein the total for both of them is no more than 22 GPa.

27. A film according to any preceding claim wherein the delamination resistance of the film is at least about 500 mN/25mm.

28. A film according to any preceding claim which is a coextruded film.

29. A magnetic recording medium comprising a film according to any of claims 1 to 28, and a magnetic layer disposed on one surface thereof, preferably wherein said magnetic recording medium is an LTO magnetic recording medium.

30. An electronic or opto-electronic device comprising a film according to any of claims 1 to 28, preferably selected from an electroluminescent display device, an electrophoretic display device, a photovoltaic cell and a semiconductor device, and preferably wherein said device is flexible.

**Patentansprüche**

1. Mehrschichtige biaxial orientierte Folie, umfassend eine erste Schicht (A), die einen aromatischen Polyester (a) umfasst, und eine zweite Schicht (B), die ein Polyolefin (b) mit einem Schmelzpunkt von 230 bis 290°C umfasst, wobei es sich bei dem Polyolefin um ein Styrolpolymer handelt, und eine Klebezwischenschicht (C) zwischen einer Schicht (A) und einer Schicht (B), wobei die Klebezwischenschicht (C) ein Verbindungsschichtmaterial (c) umfasst, das aus anhydridmodifizierten Ethylen-Copolymeren ausgewählt ist, wobei der Anhydrid-Anteil in dem Copolymer höchstens 3,0 Gew.-%, bezogen auf das Polymer, beträgt und wobei das Ethylen-Copolymer ein oder mehrere zusätzliche Comonomere, die von Styrol verschieden sind, umfasst.

2. Folie nach Anspruch 1, wobei das eine bzw. die mehreren zusätzlichen Comonomere aus Comonomeren, die von vinylaromatischen Verbindungen verschieden sind, ausgewählt sind.

3. Folie nach Anspruch 1 oder 2, wobei es sich bei dem Anhydrid um Maleinsäureanhydrid handelt.

4. Folie nach einem der Ansprüche 1 bis 3, wobei das Anhydrid auf die Copolymer-Hauptkette aufgepfropft ist.

5. Folie nach einem der Ansprüche 1 bis 4, wobei das Anhydrid in dem Copolymer in einer Menge von höchstens 2,5 Gew.-%, bezogen auf das Copolymer, vorliegt.

6. Folie nach einem der Ansprüche 1 bis 5, wobei das anhydridmodifizierte Ethylen-Copolymer Ethylen in einem Gewichtsprozentanteil im Bereich von 40% bis 95% umfasst.

7. Folie nach einem der Ansprüche 1 bis 6, wobei das anhydridmodifizierte Ethylen-Copolymer ferner eines oder mehrere der folgenden Comonomere umfasst:

   (i) Propylen, vorzugsweise in einem Gewichtsprozentanteil von 0 bis 40%;
   (ii) Buten, vorzugsweise in einem Gewichtsprozentanteil von 0 bis 5%;
   (iii) Acrylatester wie den Methyl-, Ethyl-, Propyl- oder Butylester, vorzugsweise in einem Gewichtsprozentanteil von 0 bis 15%;
   (iv) Vinylacetat, vorzugsweise in einem Gewichtsprozentanteil von 0 bis 30%; und
   (v) Maleinsäureanhydrid, vorzugsweise in einem Gewichtsprozentanteil von bis zu 3%.

8. Folie nach einem der Ansprüche 1 bis 7, wobei es sich bei dem anhydridmodifizierten Ethylen-Copolymer um ein anhydridmodifiziertes Ethylen-Acrylat-Polymerharz handelt, wobei vorzugsweise die Ethylen-Einheiten in Mengen von 90 bis 95 Gew.-% vorliegen; die Acrylat-Einheiten in Mengen von 5 bis 10 Gew.-% vorliegen und die Anhydrid-Einheiten in Mengen von 0,1 bis 2 Gew.-% vorliegen.

9. Folie nach einem der Ansprüche 1 bis 7, wobei es sich bei dem anhydridmodifizierten Ethylen-Copolymer um ein anhydridmodifiziertes Ethylen-Vinylacetat-Copolymer handelt, wobei vorzugsweise die Ethylen-Einheiten in Mengen von 70 bis 80 Gew.-% vorliegen; die Vinylacetat-Einheiten in Mengen von 20 bis 30 Gew.-% vorliegen und die Anhydrid-Einheiten in Mengen von 0,1 bis 2 Gew.-% vorliegen.

10. Folie nach einem der Ansprüche 1 bis 7, wobei das anhydridmodifizierte Ethylen-Copolymer ein oder mehrere zusätzliche Alken-Monomerwiederholungseinheiten, die vorzugsweise aus Propylen und Buten ausgewählt sind, umfasst und vorzugsweise sowohl Propylen als auch Buten in dem Copolymer vorliegen.

11. Folie nach Anspruch 10, wobei die Ethylen-Einheiten in Mengen von 60 bis 80 Gew.-% vorliegen; die eine bzw. die mehreren zusätzlichen Alken-Monomerwiederholungseinheiten in einer Menge von etwa 20 bis etwa 40 Gew.-% vorliegen, wobei vorzugsweise Propylen-Einheiten in einer Menge von etwa 30% bis etwa 40% vorliegen und Buten-Einheiten in einer Menge von etwa 0,5% bis etwa 2,5% vorliegen; und die Anhydrid-Einheiten in Mengen von 0,1 bis 2 Gew.-% vorliegen.

12. Folie nach einem der vorhergehenden Ansprüche, wobei das anhydridmodifizierte Ethylen-Copolymer eine gemäß ASTM D1525 gemessene Vicat-Erweichungstemperatur im Bereich von 30°C bis 70°C und/oder einen gemäß ASTM D1238 gemessenen Schmelzflussindex (Melt Flow Index, MFI) von 4 bis 10 g/10 Minuten aufweist und/oder einen Gewichtsverlust von höchstens 5% bei isothermem Erhitzen auf 310°C unter Stickstoffatmosphäre über einen Zeitraum von 10 Minuten aufweist.

13. Folie nach einem der vorhergehenden Ansprüche, wobei es sich bei dem aromatischen Polyester (a) um Polyethylen-2,6-naphthalindicarboxylat handelt.

14. Folie nach einem der vorhergehenden Ansprüche, wobei es sich bei dem Polyolefin um ein Styrolpolymer handelt, das aus Polystyrol, Poly(alkylstyrol)en und Poly(arylstyrol)en ausgewählt ist.

15. Folie nach einem der Ansprüche 1 bis 13, wobei das Polyolefin aus Polystyrol, Polymethylstyrol, Poly-dimethylstyrol und Polybutylstyrol ausgewählt ist.

16. Folie nach einem der Ansprüche 1 bis 13, wobei es sich bei dem Polyolefin um ein Styrolpolymer mit syndiotaktischer Struktur handelt.

17. Folie nach Anspruch 16, wobei das syndiotaktische Styrolpolymer aus Polystyrol, Poly(alkylstyrol)en und Poly(arylstyrol)en ausgewählt ist, wobei das Poly(alkylstyrol) vorzugsweise aus Poly(methylstyrol), Poly(ethylstyrol), Poly(propylstyrol) und Poly(butylstyrol) ausgewählt ist und wobei es sich bei dem Poly(arylstyrol) vorzugsweise um Poly-(phenylstyrol) handelt, und wobei das syndio-taktische Styrolpolymer vorzugsweise aus Poly-styrol, Poly(p-methylstyrol), Poly(m-methylstyrol) und Poly(p-tert-butylstyrol) ausgewählt ist.

18. Folie nach einem der vorhergehenden Ansprüche, wobei das Gewichtsverhältnis von Polyolefin (b) zum Gesamtfoliengewicht 2 bis 60 Gew.-% beträgt.

19. Folie nach einem der vorhergehenden Ansprüche, umfassend mindestens eine weitere Polyesterschicht, mindestens eine weitere Polyolefinschicht und mindestens eine weitere Klebezwischenschicht, wobei zwischen allen benachbarten Polyester- und Polyolefinschichten eine Klebezwischenschicht vorliegt.

20. Folie nach einem der vorhergehenden Ansprüche, wobei die Schichtstruktur der Folie aus:

(i) einer 3-schichtigen Struktur mit der Schichtenfolge ACB;
(ii) einer 5-schichtigen Struktur mit der Schichtenfolge ACBCA; und
(iii) einer mehrschichtigen Struktur mit 9 oder 13 oder mehr Schichten und vorzugsweise höchstens 51 Schichten, vorzugsweise höchstens 25 Schichten, wobei Schichten (A) und Schichten (B) mit einer Zwischenschicht der Folienschicht (C) dazwischen alternierend angeordnet sind, so dass die Schichtenfolge [...ACBCACBCA...] lautet,
ausgewählt ist.

21. Folie nach einem der vorhergehenden Ansprüche mit mindestens 5 Schichten, wobei es sich bei der Außenschicht um eine Schicht (A) handelt.

22. Folie nach einem der vorhergehenden Ansprüche, wobei die Dicke der bzw. jeder Klebezwischenschicht (C) 0,05 μm bis 2,5 μm, vorzugsweise 0,1 μm bis 1,5 μm, beträgt.

23. Folie nach einem der vorhergehenden Ansprüche, wobei die Gesamtfoliendicke 1 bis 10 μm beträgt.

24. Folie nach einem der vorhergehenden Ansprüche, umfassend 5 Schichten mit der Schichtenfolge ACBCA, wobei die Gesamtdicke der Folie 4 bis 6 μm beträgt und wobei die Dicke jeder Schicht (C) etwa 0,4 bis etwa 0,5 μm beträgt, wobei die Dicke jeder Polyesterschicht (A) vorzugsweise etwa das Doppelte der Dicke der Polyolefinschicht (B) beträgt.

25. Folie nach einem der Ansprüche 1 bis 22, wobei die Gesamtfoliendicke im Bereich von etwa 5 bis etwa 350 μm liegt.

26. Folie nach einem der vorhergehenden Ansprüche, wobei der Feuchtigkeitsausdehnungskoeffizient in der Querrichtung der Folie $0,1x10^{-6}$ bis $13x10^{-6}$%/RF% beträgt und/oder wobei der Temperaturausdehnungskoeffizient in der Querrichtung der Folie $-5x10^{-6}$ bis $15x10^{-6}$%/°C beträgt und/oder wobei der Youngsche Elastizitätsmodul sowohl in der Querrichtung als auch in der Maschinenrichtung der Folie 5 GPa oder mehr beträgt und wobei die Summe

EP 2 726 285 B1

für beide davon vorzugsweise höchstens 22 GPa beträgt.

27. Folie nach einem der vorhergehenden Ansprüche, wobei die Delaminationsfestigkeit der Folie mindestens etwa 500 mN/25 mm beträgt.

28. Folie nach einem der vorhergehenden Ansprüche, bei der es sich um eine coextrudierte Folie handelt.

29. Magnetisches Aufzeichnungsmedium, umfassend eine Folie nach einem der Ansprüche 1 bis 28 und eine auf einer Oberfläche davon angeordnete magnetische Schicht, wobei es sich bei dem magnetischen Aufzeichnungsmedium vorzugsweise um ein magnetisches Aufzeichnungsmedium im LTO-Format handelt.

30. Elektronische oder optoelektronische Vorrichtung, umfassend eine Folie nach einem der Ansprüche 1 bis 28, vorzugsweise ausgewählt aus einer Elektrolumineszenzanzeigevorrichtung, einer Elektrophoreseanzeigevorrichtung, einer photovoltaischen Zelle und einer Halbleitervorrichtung, und wobei die Vorrichtung vorzugsweise flexibel ist.

**Revendications**

1. Film multicouches orienté biaxialement, comprenant une première couche (A) comprenant un polyester aromatique (a) et une deuxième couche (B) comprenant une polyoléfine (b) ayant un point de fusion de 230 °C à 290 °C, ladite polyoléfine étant un polymère de styrène, et une couche intermédiaire adhésive (C) entre une couche (A) et une couche (B), ladite couche intermédiaire adhésive (C) comprenant un matériau de couche de liaison (c) sélectionné parmi des copolymères d'éthylène modifiés par un anhydride, la proportion d'anhydride présente dans le copolymère n'étant pas supérieure à 3,0 % en poids du polymère, et le copolymère d'éthylène comprenant un ou plusieurs comonomères additionnels autres que le styrène.

2. Film selon la revendication 1, dans lequel lesdits un ou plusieurs comonomères additionnels sont sélectionnés parmi des comonomères autres que des composés aromatiques vinyliques.

3. Film selon la revendication 1 ou 2, dans lequel ledit anhydride est l'anhydride maléique.

4. Film selon l'une quelconque des revendications 1 à 3, dans lequel ledit anhydride est greffé sur le squelette du copolymère.

5. Film selon l'une quelconque des revendications 1 à 4, dans lequel ledit anhydride est présent dans le copolymère dans une proportion qui n'est pas supérieure à 2,5 % en poids du copolymère.

6. Film selon l'une quelconque des revendications 1 à 5, dans lequel ledit copolymère d'éthylène modifié par un anhydride comprend de l'éthylène à un niveau de pourcentage pondéral de 40 % à 95 %.

7. Film selon l'une quelconque des revendications 1 à 6, dans lequel ledit copolymère d'éthylène modifié par un anhydride comprend en outre un ou plusieurs des comonomères suivants :

   (i) du propylène, préférablement à un niveau de pourcentage pondéral de 0 à 40 % ;
   (ii) du butène, préférablement à un niveau de pourcentage pondéral de 0 à 5 % ;
   (iii) un ester acrylate tel que l'ester méthylique, éthylique, propylique ou butylique, préférablement à un niveau de pourcentage pondéral de 0 à 15 % ;
   (iv) de l'acétate de vinyle, préférablement à un niveau de pourcentage pondéral de 0 à 30 % ; et
   (v) de l'anhydride maléique, préférablement à un niveau de pourcentage pondéral jusqu'à 3 %.

8. Film selon l'une quelconque des revendications 1 à 7, dans lequel ledit copolymère d'éthylène modifié par un anhydride est une résine polymère d'acrylate d'éthylène modifiée par un anhydride, préférablement dans laquelle les unités éthylène sont présentes dans des quantités de 90 % à 95 % en poids ; les unités acrylate sont présentes dans des quantités de 5 % à 10 % en poids ; et les unités anhydride sont présentes dans des quantités de 0,1 % à 2 % en poids.

9. Film selon l'une quelconque des revendications 1 à 7, dans lequel ledit copolymère d'éthylène modifié par un anhydride est un copolymère d'éthylène-acétate de vinyle modifié par un anhydride, préférablement dans lequel les unités éthylène sont présentes dans des quantités de 70 % à 80 % en poids ; les unités acétate de vinyle sont présentes dans des quantités de 20 % à 30 % en poids ; et les unités anhydride sont présentes dans des quantités de 0,1 % à 2 % en poids.

**10.** Film selon l'une quelconque des revendications 1 à 7, dans lequel ledit copolymère d'éthylène modifié par un anhydride comprend une ou plusieurs unités de répétition monomères additionnelles qui sont des unités alcène, préférablement sélectionnées parmi le propylène et le butène, et le propylène et le butène étant préférablement tous deux présents dans le copolymère.

**11.** Film selon la revendication 10, dans lequel les unités éthylène sont présentes dans des quantités de 60 % à 80 % en poids ; lesdites une ou plusieurs unités de répétition monomères additionnelles qui sont des unités alcène sont présentes dans une quantité d'environ 20 % à environ 40 % en poids, préférablement dans lequel les unités propylène sont présentes dans une quantité d'environ 30 % à environ 40 %, et les unités butène sont présentes dans une quantité d'environ 0,5 % à environ 2,5 % ; et les unités anhydride sont présentes dans des quantités de 0,1 % à 2 % en poids.

**12.** Film selon l'une quelconque des revendications précédentes, dans lequel ledit copolymère d'éthylène modifié par un anhydride présente une température de ramollissement Vicat, mesurée selon ASTM D1525, de 30 °C à 70 °C ; et/ou un indice d'écoulement à l'état fondu (MFI) de 4 à 10 g/10 minutes, mesuré selon ASTM D1238 ; et/ou présente une perte de poids qui n'est pas supérieure à 5 % quand il est chauffé de façon isotherme à 310 °C, sous une atmosphère d'azote, pendant une période de 10 minutes.

**13.** Film selon l'une quelconque des revendications précédentes, dans lequel ledit polyester aromatique (a) est le polyéthylène-dicarboxylate de 2,6-naphtalène.

**14.** Film selon l'une quelconque des revendications précédentes, dans lequel ladite polyoléfine est un polymère de styrène sélectionné parmi le polystyrène, des poly(alkylstyrène)s et des poly(arylstyrène)s.

**15.** Film selon l'une quelconque des revendications 1 à 13, dans lequel ladite polyoléfine est sélectionnée parmi le polystyrène, le polyméthylstyrène, le polydiméthylstyrène, et le polybutylstyrène.

**16.** Film selon l'une quelconque des revendications 1 à 13, dans lequel ladite polyoléfine est un polymère de styrène ayant une structure syndiotactique.

**17.** Film selon la revendication 16, dans lequel ledit polymère de styrène syndiotactique est sélectionné parmi le polystyrène, les poly(alkylstyrène)s et les poly(arylstyrène)s, préférablement dans lequel ledit poly(alkylstyrène) est sélectionné parmi le poly(méthyl)styrène, le poly(éthylstyrène), le poly(propylstyrène), et le poly(butylstyrène), et préférablement dans lequel ledit poly(arylstyrène) est le poly(phénylstyrène), et préférablement dans lequel ledit polymère de styrène syndiotactique est sélectionné parmi le polystyrène, le poly(p-méthylstyrène), le poly(m-méthylstyrène), et le poly(p-butylstyrène tertiaire).

**18.** Film selon l'une quelconque des revendications précédentes, dans lequel le rapport pondéral de la polyoléfine (b) contre le poids total du film est de 2 % à 60 % en poids.

**19.** Film selon l'une quelconque des revendications précédentes, comprenant au moins une couche de polyester supplémentaire, au moins une couche de polyoléfine supplémentaire, et au moins une couche intermédiaire adhésive supplémentaire, une couche intermédiaire adhésive étant présente entre toutes couches adjacentes de polyester et de polyoléfine.

**20.** Film selon l'une quelconque des revendications précédentes, dans lequel la structure des couches du film est sélectionnée parmi :

(i) une structure à 3 couches dans laquelle les couches sont disposées selon la séquence ACB ;
(ii) une structure à 5 couches dans laquelle les couches sont disposées selon la séquence ACBCA ; et
(iii) une structure multicouches comportant 9 ou 13 couches ou plus, et ne comportant préférablement pas plus de 51 couches, préférablement pas plus de 25 couches, dans laquelle les couches (A) et les couches (B) sont disposées de façon alternée, une couche intermédiaire constituée de la couche de film (C) étant disposée entre celles-ci de telle sorte que la séquence des couches soit [...ACBCACBCA...].

**21.** Film selon l'une quelconque des revendications précédentes, comportant au moins 5 couches, la couche extérieure étant une couche (A).

**22.** Film selon l'une quelconque des revendications précédentes, dans lequel l'épaisseur de la ou de chaque couche intermédiaire adhésive (C) est de 0,05 $\mu$m à 2,5 $\mu$m, préférablement de 0,1 $\mu$m à 1,5 $\mu$m.

**23.** Film selon l'une quelconque des revendications précédentes, l'épaisseur totale du film étant de 1 $\mu$m à 10 $\mu$m.

**24.** Film selon l'une quelconque des revendications précédentes, comprenant 5 couches, les couches étant disposées selon la séquence ACBCA, l'épaisseur totale du film étant de 4 $\mu$m à 6 $\mu$m, et l'épaisseur de chaque couche (C) étant d'environ 0,4 $\mu$m à environ 0,5 $\mu$m, préférablement dans lequel l'épaisseur de chaque couche de polyester (A) est d'environ deux fois l'épaisseur de la couche de polyoléfine (B).

**25.** Film selon l'une quelconque des revendications 1 à 22, l'épaisseur totale du film étant d'environ 5 $\mu$m à environ 350 $\mu$m.

**26.** Film selon l'une quelconque des revendications précédentes, le coefficient d'expansion par l'humidité dans le sens travers du film étant de 0,1 x 10$^{-6}$ à 13 x 10$^{-6}$ %/% HR, et/ou le coefficient d'expansion thermique dans le sens travers du film étant de -5 x 10$^{-6}$ à 15 x 10$^{-6}$ %/°C, et/ou le module de Young, tant dans le sens travers que dans le sens machine du film, étant de 5 GPa ou plus et le total pour les deux ne dépassant préférablement pas 22 GPa.

**27.** Film selon l'une quelconque des revendications précédentes, la résistance au délaminage du film étant d'au moins environ 500 mN/25 mm.

**28.** Film selon l'une quelconque des revendications précédentes, lequel est un film coextrudé.

**29.** Support d'enregistrement magnétique comprenant un film selon l'une quelconque des revendications 1 à 28, et une couche magnétique disposée sur une surface de celui-ci, ledit support d'enregistrement magnétique étant préférablement un support d'enregistrement magnétique LTO.

**30.** Dispositif électronique ou opto-électronique comprenant un film selon l'une quelconque des revendications 1 à 28, préférablement sélectionné parmi un dispositif d'affichage électroluminescent, un dispositif d'affichage électrophorétique, une cellule photovoltaïque et un dispositif semi-conducteur, et ledit dispositif étant préférablement flexible.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0592284 A
- US 5759467 A
- US 20050058825 A1
- EP 1712592 A
- JP 2000326467 A

### Non-patent literature cited in the description

- **DIAS et al.** *Polymer,* 2008, vol. 49, 2937
- **KAMDAR et al.** *Polymer,* 2009, vol. 50, 3319
- **HITCHCOCK ; HAMMONS ; YAU.** The dual-capillary method for modern-day viscometry. *American Laboratory,* August 1994
- **KRUMPA et al.** *Polym. Test.,* 2005, vol. 24, 129
- **M LIA et al.** *Polymer,* 2002, vol. 43, 5455
- **Y PO et al.** *Polymer,* 1996, vol. 37, 5653